(19) Europäisches Patentamt
European Patent Office
Office européen des brevets

(11) EP 4 020 005 B1

(12) # EUROPEAN PATENT SPECIFICATION

(45) Date of publication and mention of the grant of the patent:
**31.12.2025 Bulletin 2026/01**

(21) Application number: **19943711.2**

(22) Date of filing: **23.08.2019**

(51) International Patent Classification (IPC):
***G01S 7/481*** *(2006.01)* ***G02B 5/04*** *(2006.01)*
***G02B 26/12*** *(2006.01)*

(52) Cooperative Patent Classification (CPC):
**G02B 26/123; G01S 7/4815; G01S 7/4817; G01S 17/42; G02B 27/144**

(86) International application number:
**PCT/CN2019/102326**

(87) International publication number:
**WO 2021/035428 (04.03.2021 Gazette 2021/09)**

(54) **LASER RADAR AND AUTOMATIC DRIVING EQUIPMENT**
LASERRADAR UND AUTOMATISCHE FAHRAUSRÜSTUNG
RADAR LASER ET ÉQUIPEMENT DE COMMANDE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.06.2022 Bulletin 2022/26**

(73) Proprietor: **Suteng Innovation Technology Co., Ltd.**
**Shenzhen City Guangdong 518000 (CN)**

(72) Inventors:
- **LIU, Letian**
  **Shenzhen, Guangdong 518000 (CN)**
- **MA, Dinglong**
  **Shenzhen, Guangdong 518000 (CN)**
- **LIU, Yingchun**
  **Shenzhen, Guangdong 518000 (CN)**

(74) Representative: **Ran, Handong et al**
**Maucher Jenkins**
**Seventh Floor Offices**
**Artillery House**
**11-19 Artillery Row**
**London SW1P 1RT (GB)**

(56) References cited:
**EP-A2- 3 173 816**
**WO-A1-2019/151058**
**CN-A- 109 254 286**
**CN-A- 109 254 286**
**CN-A- 109 725 299**
**CN-A- 109 828 259**
**CN-U- 208 737 000**
**KR-A- 20190 011 497**
**US-A1- 2019 041 545**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 020 005 B1

## Description

### CROSS-REFERENCE TO RELATED APPLICATION

The present application is a continuation of International Application No. PCT/CN2019/102326, filed on August 23, 2019.

### TECHNICAL FIELD

Embodiments of the present invention relate to the technical field of a radar, and in particular, to a LiDAR and an automated driving device.

### BACKGROUND

A LiDAR is a radar system using lasers to detect characteristics of a target object, such as a position and a speed. A working principle of the LiDAR is that an emission module first emits outgoing lasers for detection to the target, a receiving module then receives echo lasers reflected from the target object, and processes the received echo lasers, to obtain relevant information of the target object, for example, parameters such as distance, orientation, height, speed, posture, and even shape.

In a rotary LiDAR in the prior art, the entire LiDAR device rotates around an axis to scan a detection region. In order to meet a detection need, a complex optical design is used for the original rotary LiDAR, and the entire LiDAR device rotates around the axis, making a rotating part cumbersome. As a result, the product has a large size, high energy consumption, and poor stability, and cannot be further miniaturized.

CN 109 254 286 A discloses an optical scanning device for an airborne LiDAR. The device includes at least two laser sources, a tower-shaped prism, a photoelectric detection device, and a driving device for driving the tower-shaped prism to rotate along a rotating shaft. Each of the at least two laser sources is used for emitting parallel laser beams to the tower-shaped prism in a direction perpendicular to the rotating shaft, so that the laser beams can reach and scan a target scanning region after being reflected from the tower-shaped prism. The photoelectric detection device is used for receiving echo signals reflected from the target scanning region, and obtaining a point cloud of the target scanning region based on the echo signals.

### SUMMARY

In view of the foregoing shortcomings of the prior art, embodiments of the present invention mainly aim to provide a LiDAR and an automated driving device, to reduce a size of the rotatory LiDAR and ensure stability while satisfying a detection need.

A technical solution used in the embodiments of the present invention is as follows: A LiDAR is provided, where the LiDAR includes a transceiver component and a scanning component. The transceiver component includes n transceiver modules, where n is an integer and n>1, and each transceiver module includes an emission module and a receiving module that are correspondingly arranged. The emission module is configured to emit an outgoing laser. The receiving module is configured to receive an echo laser, which is a laser returning after the outgoing laser is reflected by an object in the detection region. The scanning component includes a rotation reflector that rotates around a rotation shaft. The rotation reflector includes at least two reflecting surfaces. The n transceiver modules correspond to the at least two reflecting surfaces, and are configured to reflect the outgoing laser emitted by the emission module and further direct the reflected outgoing laser toward the detection region, and are also configured to reflect the echo laser and further direct the reflected echo laser toward the corresponding receiving module.

Optionally, an included angle between at least one reflecting surface of the rotation reflector and the rotation shaft is different from an included angle between another reflecting surface and the rotation shaft.

Optionally, at least two reflecting surfaces corresponding to the n transceiver modules are arranged adjacently, and the adjacent reflecting surfaces form an angle K when being arranged, where $0° \leq K \leq 180°$.

Optionally, the rotation reflector includes m reflecting surfaces, where m is an integer and $m \leq n$, and one reflecting surface corresponds to at least one transceiver module.

Optionally, a value of an included angle $\theta$ between the outgoing laser directed toward the rotation reflector and the rotation shaft satisfies $0° \leq \theta \leq 90°$.

Optionally, the rotation reflector is in a shape of a polygonal prism or a polygonal truncated prism, and an outer side surface of the rotation reflector is the reflecting surface.

Optionally, the outgoing laser of the transceiver module and the echo laser are coaxially arranged. The transceiver module further includes a light-splitting module, and the light-splitting module is configured to direct a passing outgoing laser to the rotation reflector and is further configured to receive the echo laser reflected by the rotation reflector, deflect the echo laser, and further direct the reflected echo laser to the corresponding receiving module.

Optionally, the emission module includes a laser device module and an emission optical module. The laser device module is configured to emit the outgoing laser. The emission optical module is arranged on an optical path of the outgoing laser emitted by the laser device module, and is configured to collimate the outgoing laser.

Optionally, the laser device module is a laser device linear array, including several laser devices arranged in the linear array. The laser device linear array is arranged sparsely at two ends and densely in the middle.

Optionally, the emission optical module is a telecentric lens, which is configured to respectively collimate each beam of outgoing lasers emitted by the laser device module, and deflect the outgoing lasers toward a central optical axis of the telecentric lens.

Optionally, the emission module further includes an emission driver module, and the emission driver module is connected to the laser device module, and is configured to drive and control the laser device module to work.

Optionally, the transceiver component further includes an emission driver module, and the emission driver module is respectively connected to laser device modules in the n emission modules, and is configured to drive and control each laser device module to work.

Optionally, the scanning component further includes a driver device and a transmission device. The driver device is provided with an output shaft. The output shaft is connected to the rotation reflector through the transmission device. The output shaft of the driver device drives the rotation reflector to rotate.

Optionally, the receiving module includes a detector module and a receiving optical module. The receiving optical module is arranged on an optical path of the echo laser reflected by the scanning component, and is configured to focus the echo laser. The detector module is configured to receive the echo laser focused by the receiving optical module.

Optionally, the detector module is a detector linear array, including several detectors arranged in the linear array. The detector linear array is arranged sparsely at two ends and densely in the middle.

Optionally, the receiving optical module is a telecentric lens, which is configured to focus the echo laser and enable each beam of echo lasers to be perpendicular to the detector linear array during incidence.

Optionally, the receiving module further includes a receiving driver module. The receiving driver module is connected to the detector module, and is configured to drive and control the detector module to work.

Optionally, the transceiver component further includes a receiving driver module. The receiving driver module is respectively connected to detector modules in the n receiving modules, and is configured to drive and control each detector module to work.

An example of the present invention further provides an automated driving apparatus, including a driving apparatus body and a LiDAR as described above. The LiDAR is mounted with the driving apparatus body.

Beneficial effects of the embodiments of the present invention are as follows: Different from the case in the prior art, in the LiDAR provided in the embodiments of the present invention, the rotation reflector is provided as a scanning module, only the scanning module is rotated, and the transceiver component is not rotated. Compared with the prior art in which the entire device needs to be rotated together under drive, in the embodiments of the present invention, fewer components need to be rotated, which is easy to control and has low driving power consumption and good stability, thereby further reducing a product size and implementing miniaturization of the LiDAR. In addition, n transceiver modules are provided, the n transceiver modules correspond to at least two reflecting surfaces of the rotation reflector. The transceiver modules correspond to the angle of view formed by the at least two reflecting surfaces, and are spliced along the horizontal direction to expand the overall horizontal field of view of the LiDAR. Even each reflecting surface is provided with a corresponding transceiver module, and the overall horizontal field of view formed through splicing can even cover 360°.

## BRIEF DESCRIPTION OF THE DIAGRAMS

One or more examples are described by using examples with reference to diagrams in drawings corresponding to the examples. These exemplary descriptions do not constitute a limitation to the examples. Elements with the same reference signs in the drawings indicate similar elements. Unless otherwise stated, the diagrams in the drawings do not constitute a proportional limitation.

FIG. 1 is a structural block diagram of a LiDAR according to an example of the present invention;

FIG. 2a is a schematic structural diagram of a rotation reflector according to an example of the present invention;

FIG. 2b is a schematic structural diagram of a rotation reflector according to another example of the present invention;

FIG. 3a is a schematic diagram of an optical path at a first moment according to an example of the present invention;

FIG. 3b is a schematic diagram of an optical path at a second moment according to an example of the present invention;

FIG. 3c is a schematic diagram of an optical path at a third moment according to an example of the present invention;

FIG. 3d is a schematic diagram of an optical path at a fourth moment according to an example of the present invention;

FIG. 4 is a schematic diagram of an angle of view covered by the LiDAR shown in FIG. 3a to FIG. 3d;

FIG. 5 is a schematic structural diagram of a LiDAR according to another example of the present invention;

FIG. 6 is a schematic structural diagram of a rotation reflector and a rotation shaft according to an example of the present invention;

FIG. 7a is a schematic diagram of an optical path in a vertical plane when an included angle between the reflecting surface a and a rotation shaft is 0° according to an example of the present invention;

FIG. 7b is a schematic diagram of an optical path in a vertical plane when an included angle between the reflecting surface b and a rotation shaft is $\alpha$ according to an example of the present invention;

FIG. 8a is a schematic diagram of an optical path in a vertical plane when an included angle between a reflecting surface a of a four-faced lens and a rotation shaft is $\alpha$ according to an example of the present invention;

FIG. 8b is a schematic diagram of an optical path in a vertical plane when an included angle between a reflecting surface b of a four-faced lens and a rotation shaft is $\beta$ according to an example of the present invention;

FIG. 8c is a schematic diagram of an optical path in a vertical plane when an included angle between a reflecting surface c of a four-faced lens and a rotation shaft is $\gamma$ according to an example of the present invention;

FIG. 8d is a schematic diagram of an optical path in a vertical plane when an included angle between a reflecting surface d of a four-faced lens and a rotation shaft is $\delta$ according to an example of the present invention;

FIG. 9a is a schematic diagram of an optical path in a vertical plane when an included angle between a reflecting surface d of a four-faced lens and a rotation shaft is 0° according to an example of the present invention;

FIG. 9b is a schematic diagram of an optical path in a vertical plane when an included angle between a reflecting surface d of a four-faced lens and a rotation shaft is 12.5° according to an example of the present invention;

FIG. 9c is a schematic diagram of an optical path in a vertical plane when an included angle between a reflecting surface c of a four-faced lens and a rotation shaft is 25° according to an example of the present invention;

FIG. 9d is a schematic diagram of an optical path in a vertical plane when an included angle between a reflecting surface d of a four-faced lens and a rotation shaft is 37.5° according to an example of the present invention;

FIG. 10 is a schematic diagram of an optical path in a vertical plane when an included angle between a reflecting surface d of a four-faced lens and a rotation shaft is -12.5° according to another example of the present invention;

FIG. 11a is a schematic diagram of an optical path in a vertical plane when an included angle between a reflecting surface c of a four-faced lens and a rotation shaft is 12.5° according to an example of the present invention;

FIG. 11b is a schematic diagram of an optical path in a vertical plane when an included angle between a reflecting surface d of a four-faced lens and a rotation shaft is 25° according to an example of the present invention;

FIG. 12a is a schematic diagram of a vertical field of view covered by a transceiver module after the four-faced lens in the examples shown in FIG. 9a, FIG. 9b, FIG. 11a, and FIG. 11b is rotated for scanning for a cycle;

FIG. 12b is a schematic diagram of an entire angle of view of the LiDARs shown in FIG. 4 and FIG. 12a;

FIG. 13 is a schematic diagram of a horizontal layout in which an outgoing laser arrives at a rotation reflector at an incident angle while being almost perpendicular to a rotation shaft;

FIG. 14 is a schematic diagram of a vertical layout in which an outgoing laser arrives at a rotation reflector at an incident angle less than 90° relative to a rotation shaft;

FIG. 15a is a structural block diagram of a LiDAR according to another example of the present invention;

FIG. 15b is a schematic diagram of an optical path of a LiDAR according to another example of the present invention;

FIG. 15c is a schematic diagram of an optical path of a LiDAR according to another example of the present invention;

FIG. 16 is a schematic diagram of an optical path of a LiDAR according to another example of the present invention;

FIG. 17 is a structural block diagram of a LiDAR according to another example of the present invention;

FIG. 18a is a structural block diagram of a LiDAR according to another example of the present invention;

FIG. 18b is a structural block diagram of a LiDAR according to another example of the present invention;

FIG. 19 is a structural block diagram of a LiDAR according to another example of the present invention;

FIG. 20a is a schematic diagram of an optical path of the laser device linear array and the emission optical module in FIG. 19;

FIG. 20b is a schematic diagram of an optical path of the detector linear array and the receiving optical module in FIG. 19;

FIG. 21a is a schematic diagram of a partial optical path when an emission optical module is a telecentric lens;

FIG. 21b is a schematic diagram of a partial optical path when a receiving optical module is a telecentric lens;

FIG. 22 is a schematic structural diagram of an automated driving device according to an example of the present invention; and

FIG. 23 is a schematic structural diagram of an automated driving device according to another example of the present invention.

Reference signs in the specific examples are as follows:
LiDAR 100; Transceiver component 1; Transceiver module 10; First transceiver module 101; Second transceiver module 102; Third transceiver module 103; Fourth transceiver module 104; Fifth transceiver module 105; Sixth transceiver module 106; Seventh transceiver module 107; Eighth transceiver module 108; Emission module 11; Laser device module 111; Emission driver module 112; Emission optical module 113; Receiving module 12; Detector module 121; Receiving driver module 122; Receiving optical module 123; Light-splitting module 13; Reflector module 14; Deflection module 15; First reflection module 16; Second reflection module 17; Scanning component 2; Rotation reflector 21; Four-faced lens 21a; Eight-faced lens 21b; Driver device 22; Transmission device 23; Output shaft 24; Rotation shaft 3; Automated driving device 200; and Driving device body 201.

## DETAILED DESCRIPTION

Embodiments of the technical solution of the present invention are described in detail below in conjunction with the drawings. The following examples are only used to describe the technical solutions of the present invention more clearly, hence are only used as examples, and cannot be used to limit the protection scope of the present invention.

It should be noted that unless otherwise specified, the technical or scientific terms used in the present invention should have general meanings understood by a person of ordinary skill in the art to which the present invention belongs.

In the description of the present invention, it should be understood that orientations or position relationships indicated by terms such as "center," "longitudinal," "lateral," "length," "width," "thickness," "above," "under," "front," "rear," "left," "right," "vertical," "horizontal," "top," "bottom," "inner," "outer," "clockwise," "counterclockwise," "axial," "radial," and "circumferential" are based on the orientations or position relationships shown in the drawings, are merely intended to describe the present invention and simplify the descriptions, but are not intended to indicate or imply that the indicated device or element shall have a specific orientation or be formed and operated in a specific orientation, and therefore cannot be understood as a limitation to the present invention.

In addition, the terms such as "first" and "second" are merely intended for a purpose of description, and shall not be understood as an indication or implication of relative importance or implicit indication of a quantity of indicated technical features. In the description of the present invention, "a plurality of" means two or more, unless otherwise specifically defined.

In the present invention, unless otherwise clearly specified and limited, terms such as "mounting," "connected," "connection," and "fixing" shall be understood in a general sense. For example, these technical terms may be a fixed connection, a detachable connection, or an integrated connection; or may be a mechanical connection or an electrical connection; or may be a direct connection, an indirect connection by using an intermediate medium, or an internal communication of two elements or an interaction of two elements. A person of ordinary skill in the art may understand specific meanings of the foregoing terms in the present invention according to a specific situation.

In the present invention, unless otherwise clearly specified and defined, that a first feature is "above" or "under" a second feature may be that the first feature and the second feature are in direct contact, or the first feature and the second feature are in indirect contact through an intermediate medium. Moreover, that a first feature is "above," "over," and "on" a second feature may mean that the first feature is right above or diagonally above the second feature, or may merely indicate that a horizontal height of the first feature is greater than that of the second feature. That a first feature is "below," "under," and "beneath" a second feature may mean that the first feature is right below or diagonally below the second feature, or may merely indicate that a horizontal height of the first feature is less than that of the second feature.

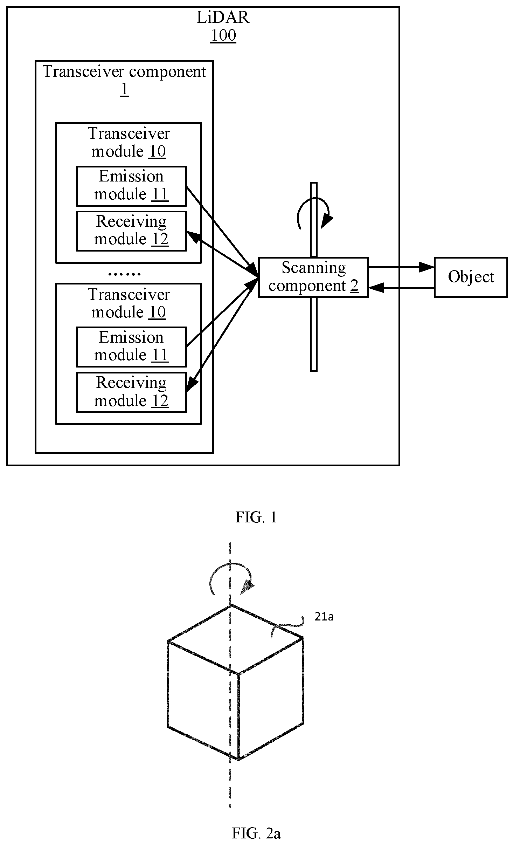

As shown in FIG. 1, the LiDAR 100 includes a transceiver component 1 and a scanning component 2. The transceiver component 1 includes n transceiver modules 10, where n is an integer and n>1. Each transceiver module 10 includes an emission module 11 and a receiving module 12 that are correspondingly arranged. The emission module 11 is configured to emit an outgoing laser. The receiving module 12 is configured to receive an echo laser. The echo laser is a laser returning after the outgoing laser is reflected by an object in the detection region. The scanning component 2 includes a rotation reflector 21 that rotates around a rotation shaft 3. The rotation reflector 21 includes at least two reflecting surfaces. The n transceiver modules 10 correspond to the at least two reflecting surfaces, and are configured to reflect the outgoing laser emitted by the emission module 11 and further direct the reflected outgoing laser toward the detection region, and are also configured to reflect the echo laser and further direct the reflected echo laser toward the corresponding the receiving module 12.

After being emitted by the emission module 11, the outgoing laser is reflected by the scanning component 2 and emitted to the detection region, and the echo laser is obtained after being reflected by the object in the detection region. The echo laser is reflected by the scanning component 2, then directed toward the receiving module 12, and finally received by the receiving module 12. Because the number n of transceiver modules 10 is greater than 1, that is, at least two transceiver modules 10 are provided, the n transceiver modules 10 correspond to at least two reflecting surfaces, different transceiver modules 10 are spliced along the horizontal direction through an angle of view formed by the at least two reflecting surfaces, thereby expanding an overall horizontal field of view of the LiDAR; and only a rotation reflector needs to be rotated to implement scanning, which is easy to control and has low driving power consumption and good stability, thereby further reducing a product size and implementing miniaturization of the LiDAR.

In some examples, the number n of transceiver modules 10 is greater than 1, that is, at least two transceiver modules 10 are provided, a number m of reflecting surfaces of the rotation reflector 21 is greater than the number n of transceiver modules 10, and each transceiver module 10 corresponds to a different reflecting surface of the rotation reflector 21. By providing at least two transceiver modules 10, each transceiver module 10 corresponds to a different reflecting surface of the rotation reflector 21 at any moment, and different transceiver modules 10 are spliced along the horizontal direction through the formed angle of view, thereby expanding the overall horizontal field of view of the LiDAR.

In some examples, at least two reflecting surfaces corresponding to the n transceiver modules 10 are arranged adjacently, so that angles of view formed by different reflecting surfaces have overlapped regions in the horizontal direction and a complete horizontal field of view is formed after splicing, to avoid a gap between fields of view, which otherwise causes missed detection and affects detection reliability.

Further, the adjacent reflecting surfaces are arranged to form an angle K, where a value range of K is 0°≤K≤180°. When K is 0°, the adjacent reflecting surfaces are arranged in parallel, and are front and back surfaces of the rotation reflector 21. The front and back surfaces of the rotation reflector 21 are configured to implement scanning, to form two angles of view, thereby expanding the overall horizontal field of view through splicing. When 0°<K<180°, the rotation reflector 21 may be a polygonal prism. The polygonal prism can be a regular polygonal prism, and included angles between all reflecting surfaces are all the same (as K). The polygonal prism can be an irregular polygonal prism, and included angles between the reflecting surfaces may not be all the same. When K is 180°, adjacent reflecting surfaces are arranged in parallel, the rotation reflector 21 is formed by splicing two reflecting surfaces, the reflecting surfaces each can have different reflectivity, and an angle of view formed after the outgoing laser and the echo laser are reflected on different reflecting surfaces can implement different detection distances and detection effects.

The n transceiver modules 10 may be or may not be all the same. In some examples, emission performance such as a size and a shape of a light spot of the outgoing laser emitted by the emission module 11 of the transceiver module 10, an arrangement density of outgoing lasers, power for the outgoing laser, the number of beams of outgoing lasers, and a divergence angle of the outgoing laser can be the same or different. Receiving performance such as efficiency of receiving an echo laser by the receiving module 12 of the transceiver module 10, receiving resolution, a receiving angle of view, and a photoelectric conversion capability can be the same or different. For example, three transceiver modules 10 are all the same, namely a first transceiver module, a second transceiver module, and a third transceiver module. An angle of view formed by each transceiver module has same detection performance, such as a same detection distance and detection resolution, which can implement uniform detection of the overall angle of view. For example, the three transceiver modules 10 are not all the same - the first transceiver module and the second transceiver module are the same, the third transceiver module is different from the other two transceiver modules, and detection performance of an angle of view formed by the third transceiver module is better than detection performance of an angle of view formed by the first transceiver module and the second transceiver module, and therefore, the angle of view formed by the third transceiver module is aligned with an important middle part of the overall angle of view, and the angle of view formed by the first transceiver module and the second transceiver module is aligned with less important left and right parts of the overall angle of view. The n transceiver modules 10 may not be all the same, and detection performance needs may be distinguished based on different regions of the angle of view. For example, at a central region or an important region of the angle of view, a detection performance need is high, and high resolution and a long detection distance are required; and at an edge region or a less important region of the angle of view, a detection performance need may be appropriately lowered. Different regions of the angle of view correspond to different transceiver modules 10. A different transceiver module 10 may be used to adapt to a detection need of each region, and there is no need to arrange the same transceiver module 10 at the edge region or the less important region as that at the central region or the important region, thereby reducing overall costs and system complexity of the LiDAR 100.

In some examples, the rotation reflector 21 includes m reflecting surfaces, m is an integer and m≤n, and one reflecting surface corresponds to at least one transceiver module 10. Angles of view formed by the transceiver modules 10 corresponding to each reflecting surface are spliced along the horizontal direction, to form a relatively large overall horizontal field of view, which can even cover 360°. Each reflecting surface may be correspondingly provided with a plurality of transceiver modules 10, and resolution of the formed angles of view is superimposed a plurality of times, to obtain higher resolution and more concentrated energy, thereby achieving a longer detection distance and a better detection effect.

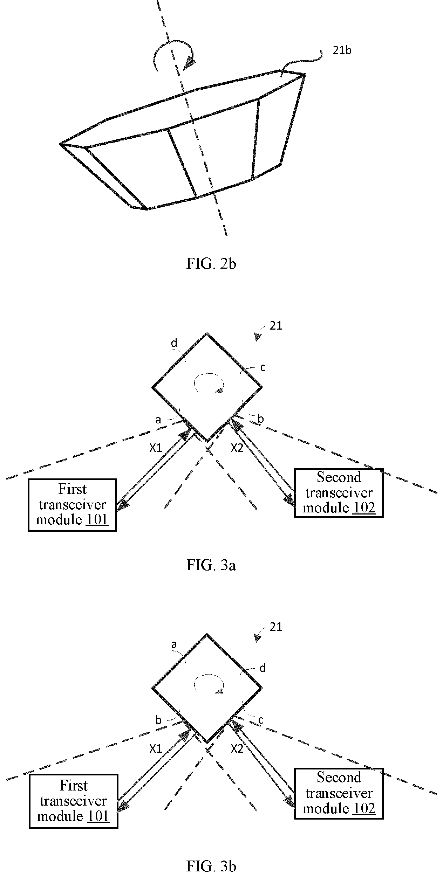

The rotation reflector 21 may have various specific structures, and may be in a shape of a polygonal prism or a polygonal truncated prism, and an outer side surface of the rotation reflector 21 is the reflecting surface. As shown in FIG. 2a, in an example, the rotation reflector 21 is a four-faced lens 21a, is in a shape of a quadrangular prism, and has four reflecting surfaces. As shown in FIG. 2b, in another example, the rotation reflector 21 is an eight-faced lens 21b, is in a shape of an octagonal truncated prism and has eight reflecting surfaces. The more reflecting surfaces the rotation reflector has, the smaller the horizontal field of view formed by each reflecting surface is, and the smaller the distortion of the outgoing laser after being reflected by the reflecting surface is. However, with more reflecting surfaces, the rotation reflector is more difficult to process, and more transceiver modules need to be correspondingly arranged. Therefore, the eight-faced lens is one optimal example, which satisfies both the distortion of the outgoing laser and complexity of a system design. In another example, the rotation reflector 21 may also be a two-faced lens, a three-faced lens, a five-faced lens, a six-faced lens, or the like. This is not limited in the present invention.

The plurality of reflecting surfaces of the rotation reflector 21 may be planes or fold surfaces. In an example, the reflecting surface of the rotation reflector 21 is divided into several reflecting regions along a direction of the rotation shaft 3, and each reflecting region form a different included angle with the rotation shaft 3. For example, the reflecting surface of the rotation reflector 21 is divided into three reflecting regions along the direction of the rotation shaft 3, namely, a first reflecting region, a second reflecting region, and a third reflecting region. An included angle between the first reflecting region and the rotation shaft 3 is 5°, an included angle between the second reflecting region and the rotation shaft 3 is 2.5°, and an included angle between the third reflecting region and the rotation shaft 3 is 0°. For example, the reflecting surface of the rotation reflector 21 is divided into three reflecting regions along the direction of the rotation shaft 3. An included angle between the first reflecting region and the rotation shaft 3 is 5°, an included angle between the second reflecting region and the rotation shaft is 2.5°, and an included angle between the third reflecting region and the rotation shaft 3 is 5°. Included angles between different reflecting regions of the same reflecting surface and the rotation shaft 3 are unequal. Angles of view formed after the outgoing laser and the echo laser are reflected at different reflecting regions cover the same angle range in the horizontal direction, but cover different angle ranges in the vertical direction. The angles of view formed at different reflecting regions are overlapped in the vertical direction, and detection resolution of the overlapped region is improved.

The following describes a correspondence between the reflecting surface and the transceiver module by using an example in which the rotation reflector is a four-faced lens and two groups of transceiver modules are arranged. As shown in FIG. 3a, at a first moment, a reflecting surface a of the rotation reflector 21 corresponds to a first transceiver module 101, and a reflecting surface b corresponds to a second transceiver module 102. The reflecting surface a is configured to receive and reflect the outgoing laser emitted by the first transceiver module 101, and receive and reflect an echo laser returning after the outgoing laser is reflected by an object in the detection region. The reflecting surface b is configured to receive and reflect the outgoing laser emitted by the second transceiver module 102, and receive and reflect an echo laser corresponding to the outgoing laser. In the figure, a region X1 is an angle of view formed by the outgoing laser and the echo laser of the first transceiver module 101 after passing the reflecting surface a, and a region X2 is an angle of view formed by the outgoing laser and the echo laser of the second transceiver module 102 after passing the reflecting surface b. The detectable overall horizontal field of view of the LiDAR at the first moment is a region formed by splicing the region X1 and the region X2 in the horizontal direction, thereby expanding the overall horizontal field of view of the LiDAR.

As the rotation reflector 21 is rotated at a second moment when the reflecting surface b corresponds to the first transceiver module 101 and the reflecting surface c corresponds to the second transceiver module 102, as shown in FIG. 3b, the region X1 is the angle of view formed by the outgoing laser and the echo laser of the first transceiver module 101 after passing the reflecting surface b, and the region X2 is the angle of view formed by the outgoing laser and the echo laser of the second transceiver module 102 after passing the reflecting surface c. The overall horizontal field of view of the LiDAR at the second moment is formed by splicing the region X1 and the region X2 in the horizontal direction.

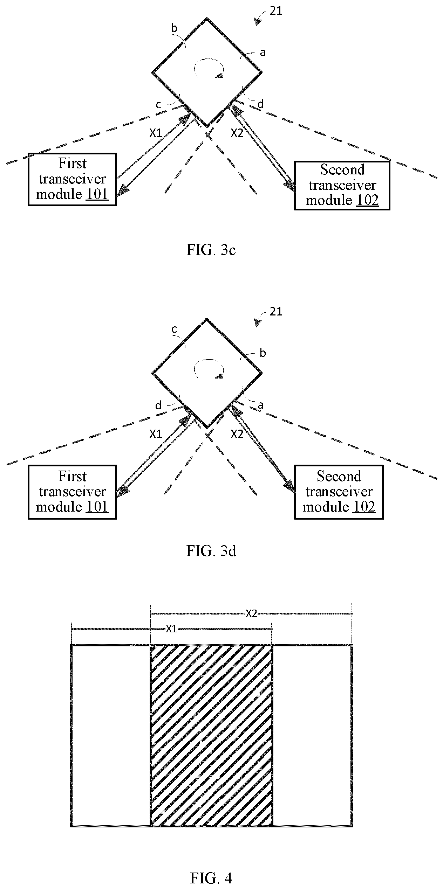

As the rotation reflector 21 is rotated at a third moment when the reflecting surface c corresponds to the first transceiver module 101 and the reflecting surface d corresponds to the second transceiver module 102, as shown in FIG. 3c, the region X1 is the angle of view formed by the outgoing laser and the echo laser of the first transceiver module 101 after passing the reflecting surface c, and the region X2 is the angle of view formed by the outgoing laser and the echo laser of the second transceiver module 102 after passing the reflecting surface d. The overall horizontal field of view of the LiDAR at the third moment is formed by splicing the region X1 and the region X2 in the horizontal direction.

As the rotation reflector 21 is rotated at a fourth moment when the reflecting surface d corresponds to the first transceiver module 101 and the reflecting surface a corresponds to the second transceiver module 102, as shown in FIG. 3d, the region X1 is the angle of view formed by the outgoing laser and the echo laser of the first transceiver module 101 after passing the reflecting surface d, and the region X2 is the angle of view formed by the outgoing laser and the echo laser of the second transceiver module 102 after passing the reflecting surface a. The overall horizontal field of view of the LiDAR at the fourth moment is formed by splicing the region X1 and the region X2 in the horizontal direction.

It may be understood that the angles of view, the region X1 and the region X2, are respectively formed by rotating different corresponding reflecting surfaces of the first transceiver module 101 and the second transceiver module 102 around the axis. Taking FIG. 3a as an example. During rotation of the rotation reflector, the outgoing laser and the echo laser of the first transceiver module are reflected by the reflecting surface a for a first time to implement detection, that is, a boundary of a horizontal field of view of the region X1. The rotation reflector continues to be rotated, and the outgoing laser and the echo laser of the first transceiver module are reflected by the reflecting surface a for a last time to implement detection, that is, another boundary of the horizontal field of view of the region X1. Further, if angles of each reflecting surface are equally divided in the horizontal direction, the same horizontal field of view of the region X1 is formed.

In an example, the horizontal field of view of the region X1 is 115°, the horizontal field of view of the region X2 is 115°, an overlapped region is 70°, a non-overlapped region is 45° on the left and 45° on the right, and an overall horizontal field of view formed through splicing is 160°.

FIG. 4 is a schematic diagram of an angle of view covered by LiDAR 100 shown in FIG. 3a to FIG. 3d. In the figure, the angle of view of the first transceiver module 101 is X1, and the angle of view of the second transceiver module 102 is X2. The overlapped region between the region X1 and the region X2 is equivalent to superposition of resolution of the region X1 and resolution of the region X2, which improves resolution of the overlapped region and can be used as a ROI region.

The foregoing describes the correspondence between the reflecting surface and the transceiver module by using examples in which the rotation reflector is the four-faced lens and the two groups of transceiver modules are arranged. The following describes a correspondence between the reflecting surface and the transceiver module and a splicing effect of the field of view formed by all the surfaces by using examples in which the rotation reflector is an eight-faced lens and eight groups of transceiver modules are arranged.

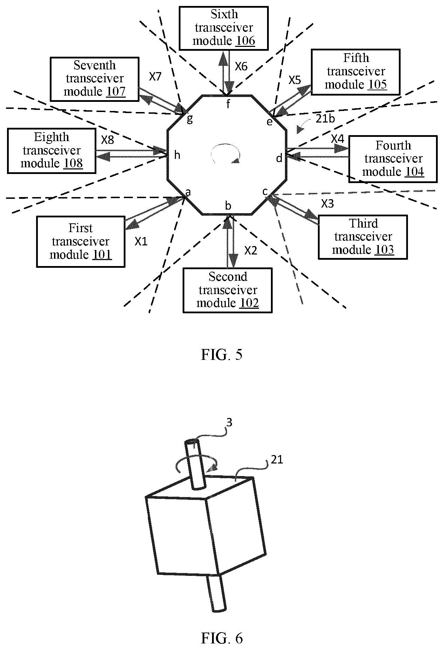

As shown in FIG. 5, in another example, the rotation reflector 21 uses an eight-faced reflector 21b, and each reflecting surface of the eight-faced lens 21b is provided with a transceiver module corresponding to the reflecting surface. At a first moment, a reflecting surface a of the eight-faced lens 21b corresponds to a first transceiver module 101, a reflecting surface b corresponds to a second transceiver module 102, a reflecting surface c corresponds to a third transceiver module 103, a reflecting surface d corresponds to a fourth transceiver module 104, a reflecting surface e corresponds to a fifth transceiver module 105, a reflecting surface f corresponds to a sixth transceiver module 106, a reflecting surface g corresponds to a seventh transceiver module 107, and a reflecting surface h corresponds to an eighth transceiver module 108. Each reflecting surface is configured to receive and reflect the outgoing laser emitted by the corresponding transceiver module, and receive and reflect the echo laser returning after the outgoing laser is reflected by the object in the detection region, so that the echo laser is received by the corresponding transceiver module. In the figure, regions X1 to X8 are respectively angles of view formed by the outgoing lasers and the echo lasers of the first transceiver module 101 to the eighth transceiver module 108 after passing the corresponding reflecting surfaces. The detectable overall horizontal field of view of the LiDAR at the first moment is a region formed by splicing the regions X1 to X8 along the horizontal direction, thereby implementing a 360° horizontal field of view. Angles of each reflecting surface of the eight-faced lens is equally divided in the horizontal direction, and therefore, the same horizontal field of view is formed by each reflecting surface. Splicing of angles of view at another moment during the rotation of the eight-faced lens is not described herein again. For details, refer to the description of the examples of the foregoing four-faced lens.

In some examples, the number m of reflecting surfaces of the rotation reflector 21 may alternatively be less than the number n of the transceiver modules 10. In this case, one reflecting surface may correspond to a plurality of transceiver modules, and the detectable overall horizontal field of view of the LiDAR is formed by splicing the angles of view formed by the outgoing laser and the echo laser of each transceiver module after passing the corresponding reflecting surface. For example, in an example, the rotation reflector 21 is a four-faced lens, six transceiver modules are provided, two reflecting surfaces correspond to one transceiver module, and two reflecting surfaces each correspond to two transceiver modules. The overall horizontal field of view is obtained by splicing angles of view formed by the six transceiver modules through the corresponding reflecting surfaces. In addition, the angle of view is formed by the reflecting surfaces of the corresponding two transceiver modules, to implement overlapping of two angles of view in a same spatial position, thereby increasing resolution. In another example, the rotation reflector 21 is an eight-faced lens, 16 transceiver modules are arranged, and each reflecting surface corresponds to two transceiver modules. For multiple-faced lens with another number of reflecting surfaces and another number of arranged transceiver components, a correspondence and an effect of splicing horizontal fields of view formed may be obtained through analogy based on descriptions of the examples of the four-faced lens and eight-faced lens. This is not described in the present invention again.

As shown in FIG. 6, the rotation reflector 21 rotates around a rotation shaft 3. Only the rotation reflector 21 rotates around the rotation shaft 3, and the emission module 11 and the receiving module 12 are both fixed. Compared with the prior art in which the emission module 11, the scanning module, and the receiving module 12 need to be rotated together under drive, in the examples of the present invention, rotation parts are reduced, and only the rotation reflector needs to be rotated to implement the scanning, which is easy to control, thereby simplifying the driving part, reducing system complexity, reducing the driving power consumption, further decreasing the product size, and implementing miniaturization of the LiDAR 100.

The rotation reflector 21 rotates around the rotation shaft 3. Because positions of the emission module 11 and the receiving module 12 are unchanged, an emission direction of the emission module 11 and a receiving direction of the receiving module 12 are also unchanged. When angles between the plurality of reflecting surfaces of the rotation reflector 21 and the rotation shaft 3 are different, vertical fields of view formed by the outgoing laser and the echo laser of the transceiver module 10, which is reflected by the different reflecting surfaces of the rotation reflector 21, can cover different angle ranges in the vertical direction. That is, vertical fields of view formed by an outgoing laser and an echo laser of one transceiver module 10, which is reflected by the different reflecting surfaces, are dislocated along the vertical direction, and dislocation displacement of the vertical fields of view along the vertical direction is related to an included angle between the corresponding reflecting surface and the rotation shaft 3. The dislocation expansion is set in the vertical direction, to implement splicing of multiple vertical fields of view, thereby enlarging the overall vertical field of view of the LiDAR 100. The range of the included angle between the rotation reflector 21 and the rotation shaft 3 is not limited, and the included angle can be selected within a range of -90° to 90°.

Unless otherwise specified, the following descriptions of directions or orientations should be understood as directions or orientation in a vertical plane.

In some examples, as shown in FIG. 2a, included angles of all reflecting surfaces of the four-faced lens 21a and the rotation shaft 3 are 0°, that is, the four-faced lens 21a is a regular quadrangular prism. In another example, included angles between reflecting surfaces of the four-faced lens 21a and the rotation shaft 3 are all $-\alpha$. In other examples, an include angle between at least one reflecting surface of the four-faced lens 21a and the rotation shaft 3 is different from an included angle between another reflecting surface and the rotation shaft 3, to cause dislocation expansion of the detection region along the vertical direction, thereby enlarging the vertical field of view. The included angle between the reflecting surface and the rotation shaft 3 can be set in various ways. This is not limited in the present invention.

The description will be provided by taking vertical fields of view formed by different reflecting surfaces of the four-faced lens 21a corresponding to a transceiver module as an example. Because the optical path is reversible, only the outgoing laser is described below, and transmission process of the echo laser is reverse to that of the outgoing laser.

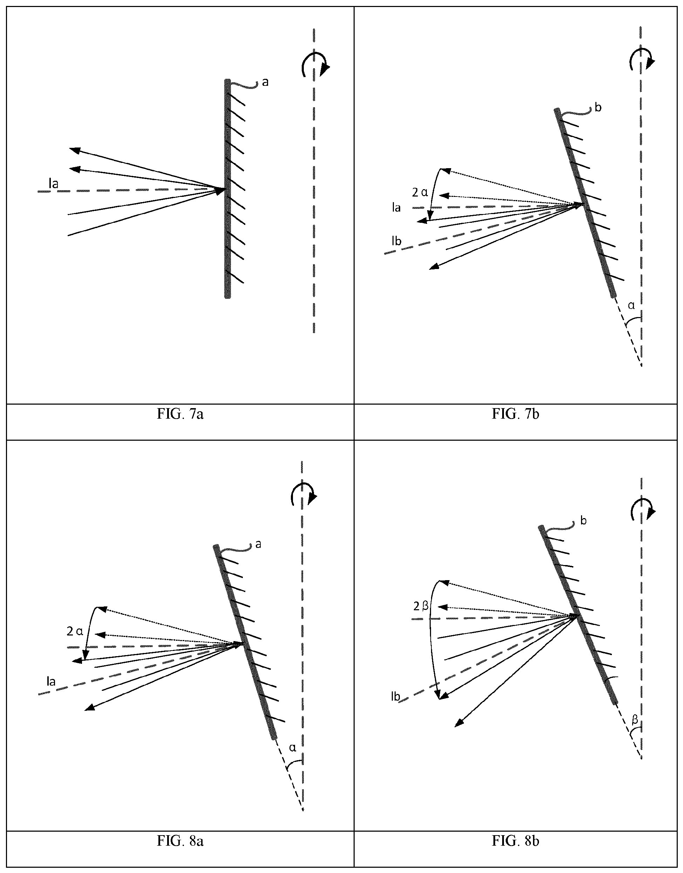

As shown in FIG. 7a, an included angle between the reflecting surface a and the rotation shaft 3 is 0°. In this case, a vertical field of view is formed after the outgoing laser is reflected by the reflecting surface a. In the figure, la is a normal of the reflecting surface a. As shown in FIG. 7b, an included angle between the reflecting surface b and the rotation shaft 3 is $\alpha$, and therefore, an angle range covered by the vertical field of view formed by the reflecting surface b along the vertical direction deflects downward by $2\alpha$ relative to the vertical field of view formed by the reflecting surface a. Specifically, a normal lb of the reflecting surface b is rotated by $\alpha$ in the counterclockwise direction compared with the normal la of the reflecting surface a. Compared with that in FIG. 7a, the reflected outgoing laser in FIG. 7b is rotated by $2\alpha$ in the counterclockwise direction, that is, the vertical field of view formed by the reflecting surface b is deflected downward by $2\alpha$ in the vertical direction relative to the vertical field of view formed by the reflecting surface a.

In addition, because the four-faced lens 21a has four reflecting surfaces and the four-faced lens 21a rotates around the rotation shaft 3, if angles between the four reflecting surfaces and the rotation shaft 3 are the same, angle ranges covered by vertical fields of view formed by the four reflecting surfaces in the vertical direction are all the same, an overall vertical field of view of the LiDAR 100 is overlapped with a vertical field of view formed by any reflecting surface, and in this case, no vertical fields of view are spliced. If the angles between the four reflecting surfaces and the rotation shaft 3 are different, when an included angle between any one reflecting surface and the rotation shaft 3 is different from any other included angle between another reflecting surface and the rotation shaft 3, an angle range covered by the vertical field of view formed by the one reflecting surface that forms a different included angle with the rotation shaft 3 is different from that covered by the vertical field of view formed by the another reflecting surface in the vertical direction, and in this case, dislocation expansion of the vertical field of view along the vertical direction is achieved, thereby enlarging an overall vertical field of view of the LiDAR. When included angles between all reflecting surfaces and the rotation shaft 3 are different, an angle range covered by the overall vertical field of view of the LiDAR 100 in the vertical direction is formed by splicing their respective vertical fields of view formed by the four reflecting surfaces.

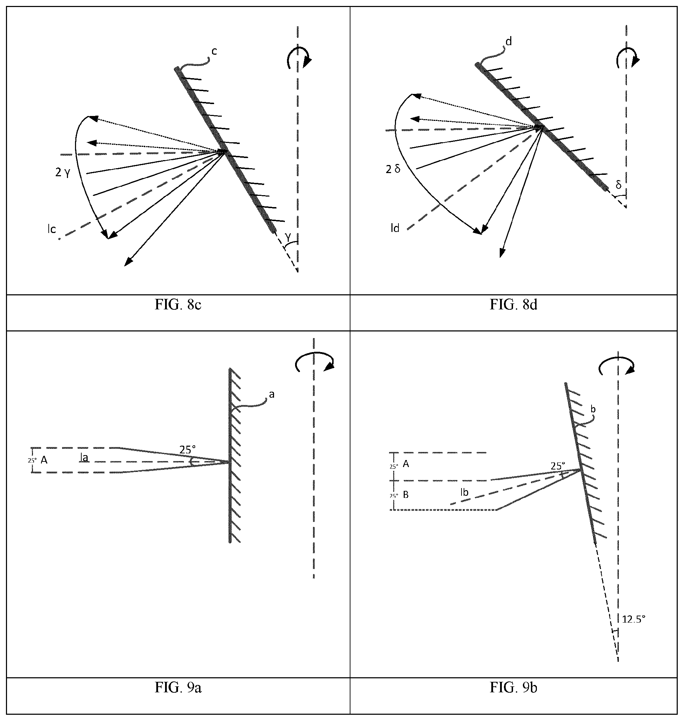

FIG. 8a to FIG. 8d are schematic diagrams of optical paths when included angles between all reflecting surfaces of the four-faced lens 21a and the rotation shaft 3 are different. As shown in FIG. 8a, an included angle between a reflecting surface a of the four-faced lens 21a and the rotation shaft 3 is $\alpha$. As shown in FIG. 8b, an included angle between a reflecting surface b of the four-faced lens 21a and the rotation shaft 3 is $\beta$. As shown in FIG. 8c, an included angle between the reflecting surface c of the four-faced lens 21a and the rotation shaft 3 is $\gamma$. As shown in FIG. 8d, an included angle between the reflecting surface d of the four-faced lens 21a and the rotation shaft 3 is $\delta$. Because the same transceiver module 10 is used, the same vertical field of view is formed by each reflecting surface.

Compared with the reflecting surface in FIG. 7a, the vertical field of view formed by the reflecting surface a in FIG. 8a is deflected downward by $2\alpha$ in the vertical direction. The vertical field of view formed by the reflecting surface b in FIG. 8b is deflected downward by $2\beta$ in the vertical direction. The vertical field of view formed by the reflecting surface c in FIG. 8c is deflected downward by $2\gamma$ in the vertical direction. The vertical field of view formed by the reflecting surface d in FIG. 8d is deflected downward by $2\delta$ in the vertical direction. The overall vertical field of view of the LiDAR 100 is formed by splicing the four vertical fields of view formed by the four reflecting surfaces.

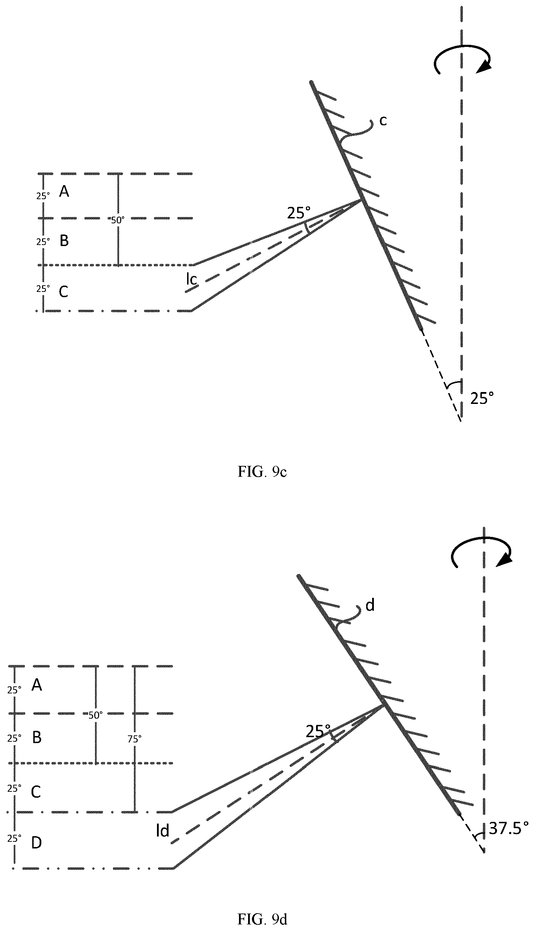

In an example, as shown in FIG. 9a, an included angle between a reflecting surface a of a four-faced lens 21a and a rotation shaft 3 is 0°. As shown in FIG. 9b, an included angle between a reflecting surface b of a four-faced lens 21a and a rotation shaft 3 is 12.5°. As shown in FIG. 9c, an included angle between a reflecting surface c of a four-faced lens 21a and a rotation shaft 3 is 25°. As shown in FIG. 9d, an included angle between a reflecting surface d of a four-faced lens 21a and a rotation shaft 3 is 37.5°. A vertical field of view formed by each reflecting surface is 25°. Based on the vertical field of view formed by the reflecting surface a, the vertical field of view formed by the reflecting surface b, as shown in FIG. 9b, is deflected downward by 25° (12.5*2) in the vertical direction; the vertical field of view formed by the reflecting surface c, as shown in FIG. 9c, is deflected downward by 50° (25*2) in the vertical direction; and the vertical field of view formed by the reflecting surface d, as shown in FIG. 9d, is deflected downward by 75° (37.5*2) in the vertical direction. In the figures, a region A is the vertical field of view of the reflecting surface a, a region B is the vertical field of view of the reflecting surface b, a region C is the vertical field of view of the reflecting surface c, and a region D is the vertical field of view of the reflecting surface d. The vertical fields of view of the four reflecting surfaces are almost seamlessly spliced to 100° (25°+25°+25°+25°).

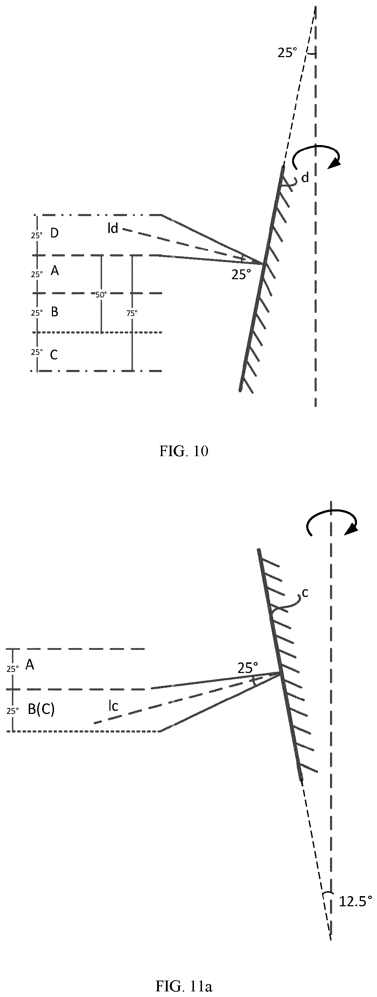

In another example, referring to FIG. 10, a difference from FIG. 9d is that in this example, the reflecting surface d of the four-faced lens 21 a forms an included angle direction with the rotation shaft 3 that is opposite to those of the reflecting surfaces b and c, and the included angle is -12.5°. As shown in FIG. 10, the vertical field of view formed by the reflecting surface d is deflected upward by 25° (-12.5*2) in the vertical direction on the basis of the vertical field of view formed by the reflecting surface a. The vertical fields of view of the four reflecting surfaces are also almost seamlessly spliced to 100° (25°+25°+25°+25°).

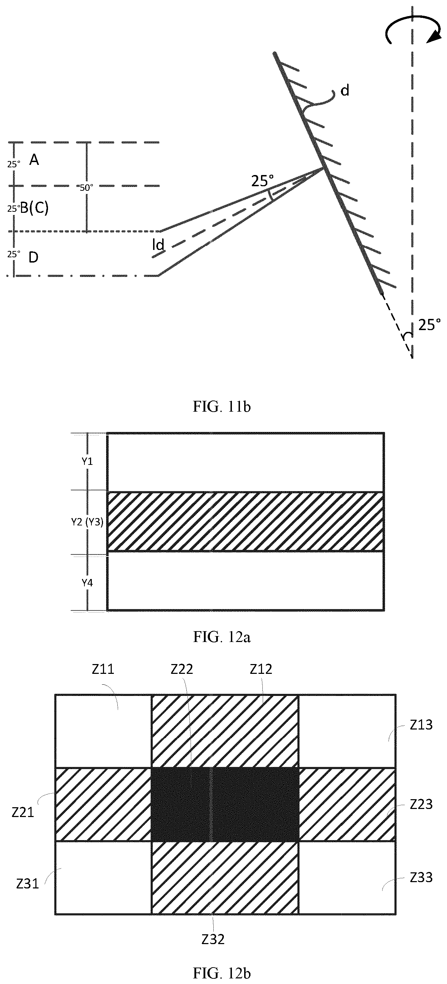

In another example, referring to FIG. 11a, FIG. 11b, FIG. 9a, and FIG. 9b, an included angle between the reflecting surface a and the rotation shaft 3 is 0°, an included angle between the reflecting surface b and the rotation shaft 3 is 12.5°, an included angle between the reflecting surface c and the rotation shaft 3 is also 12.5°, and an included angle between the reflecting surface d and the rotation shaft 3 is 25°. A vertical field of view formed by each reflecting surface is 25°. Based on the vertical field of view formed by the reflecting surface a, the vertical field of view formed by the reflecting surface b is deflected downward by 25° (12.5*2) in the vertical direction. The vertical fields of view formed by both the reflecting surface b and the reflecting surface c are deflected downward by 25° (12.5*2) in the vertical direction. The vertical field of view formed by the reflecting surface d is deflected downward by 50° (25*2) in the vertical direction. In the figures, the region B and the region C are overlapped, and resolution of the overlapped region is improved. The vertical fields of view of the four reflecting surfaces are spliced to 75° (25°+25°+25°).

FIG. 12a is a schematic diagram of a vertical field of view covered by a transceiver module after the four-faced lens in the examples shown in FIG. 9a, FIG. 9b, FIG. 11a, and FIG. 11b is rotated for scanning for a cycle. Taking the first transceiver module 101 as an example, in the figure, the region Y1 is an angle of view formed by the reflecting surface a, the region Y2 is an angle of view formed by the reflecting surface b, the region Y3 is an angle of view formed by the reflecting surface c, and the region Y4 is an angle of view formed by the reflecting surface d. Overlapping of the region Y2 and the region Y3 is equivalent to superposition of resolution of the region Y2 and resolution of the region Y3, which improves resolution of the overlapped region and can be used as a ROI region. The second transceiver module 102 forms the same overall vertical field of view as the first transceiver module 101.

Therefore, FIG. 4 and FIG. 12a are schematic diagrams of an overall angle of view of the LiDAR 100 that is obtained when the LiDAR 100 shown in FIG. 3a to FIG. 3d uses the scanning module in the examples shown in FIG. 9a, FIG. 9b, FIG. 11a, and FIG. 11b. That is, a four-faced lens whose reflecting surfaces form different included angles with the rotation shaft is used as the scanning module, and two groups of transceiver modules are used for detection simultaneously. As shown in FIG. 12b, regions Z11, Z12, Z21, Z22, Z31, and Z32 are combined as the region X1 in FIG. 4, regions Z12, Z13, Z22, Z23, Z32, and Z33 are combined as the region X2 in FIG. 4, regions Z11, Z12, and Z13 are combined as the region Y1 in FIG. 12a, regions Z21, Z22, and Z23 are combined as the region Y2 (Y3) in FIG. 12a, and regions Z31, Z32, and Z33 are combined as the region Y4 in FIG. 12a. The region Z22 is obtained by overlapping angles of view formed by two reflecting surfaces of one transceiver module in the vertical direction, and overlapping angles of view of two transceiver modules in the horizontal direction, and has the highest resolution. The regions Z12, Z21, Z23, and Z32 have the second highest resolution, and the regions Z11, Z13, Z31, and Z33 have the lowest resolution.

To simplify the drawings and facilitate the understanding of the foregoing solution, only optical axes of beams may be drawn in some of the foregoing optical path diagrams. It can be understood that a laser beam itself has an emission angle and a specific emission range, and beams directed toward the rotation reflector 21 and emitted beams all have a specific light spot diameter.

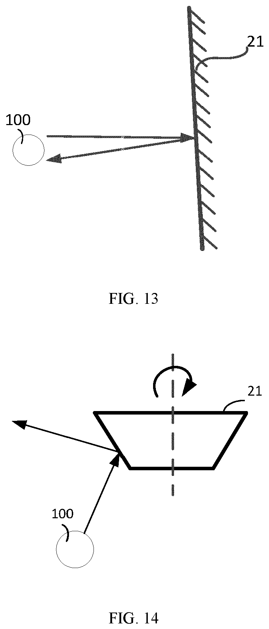

As for the incident angle of the outgoing laser on the rotation reflector 21, a value range of the included angle $\theta$ between the outgoing laser directed toward the rotation reflector 21 and the rotation shaft 3 may be: $0° \leq \theta \leq 90°$. FIG. 13 is a schematic diagram of a horizontal layout in which an outgoing laser arrives at a rotation reflector 21 at an incident angle while being almost perpendicular to a rotation shaft 3 according to an example of the present invention. When the outgoing laser is directly in front of the reflecting surface of the rotation reflector 21 and arrives at the rotation reflector 21 at the angle while being almost perpendicular to the rotation shaft 3 (an included angle between the outgoing laser and the rotation shaft 3 is close to 90°), in this case, some outgoing lasers reflected by the rotation reflector 21 are in the same plane as the transceiver module, and the outgoing lasers are apt to be blocked by a device inside the LiDAR 100 (such as the emission module 11). A similar case occurs when the rotation reflector 21 rotates near the position, and as a result, some outgoing lasers cannot be emitted out for detection and the angle of view formed by each reflecting surface is limited.

In an example, an outgoing laser arrives at the rotation reflector 21 at an incident angle less than 90° relative to the rotation shaft 3. As shown in FIG. 14, after the outgoing laser arrives at the rotation reflector 21 at an incident angle less than 90° relative to the rotation shaft 3 and is reflected by the reflecting surface, the outgoing laser is emitted obliquely upward. In this case, the reflected outgoing laser is not blocked by another device inside the LiDAR 100, and therefore, an angle of view formed by a single reflecting surface is not blocked, and distortion of the angle of view when the outgoing laser is emitted out after being reflected by the rotation reflector 21 can be further reduced. Therefore, a preferred value range of an included angle $\theta$ between the outgoing laser directed toward the rotation reflector 21 and the rotation shaft 3 is: $0° \leq \theta < 90°$.

When the outgoing laser and the echo laser are coaxial, the present invention is further described in detail through the following examples.

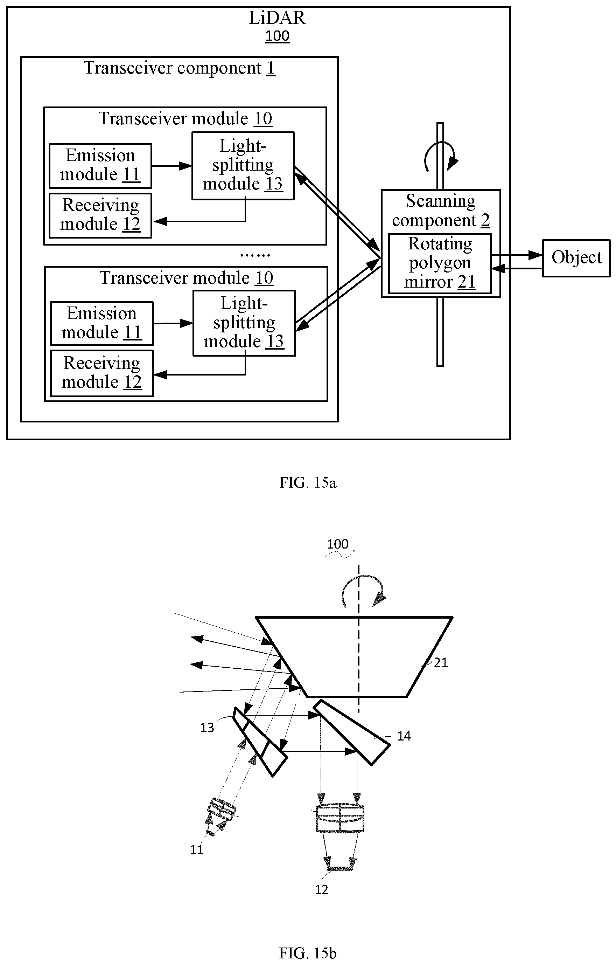

As shown in FIG. 15a, in an example, the transceiver module 10 further includes a light-splitting module 13, and the light-splitting module 13 is configured to direct a passing outgoing laser to the rotation reflector 21 and is further configured to receive the echo laser reflected by the rotation reflector 21, deflect the echo laser, and further direct the reflected echo laser to the corresponding receiving module 12. The coaxially arranged transceiver modules 10 help reduce received interference light, improve a signal-to-noise ratio of the echo laser, and improve detection quality.

As shown in FIG. 15b, in another example, the LiDAR 100 further includes a light-splitting module 13 and a reflector module 14. The light-splitting module 13 is located on an optical path between the emission module 11 and the rotation reflector 21, and the reflector module 14 is located on an optical path between the light-splitting module 13 and the receiving module 12. The light-splitting module 13 is configured to direct a passing outgoing laser to the rotation reflector 21, and deflect the echo laser to the reflector module 14. The reflector module 14 is configured to reflect the echo laser to the receiving module 12. Specifically, the light-splitting module 13 may be a polarization beam splitter, a polarization light-splitting plate, a reflector with a central aperture, a combined beam splitter (an aperture is provided at the center of a reflector and a polarization light-splitting plate is placed at the aperture), or the like. The reflector module 14 can be a plane reflector, a cylindrical reflector, an aspheric curvature reflector, or the like. For example, the light-splitting module 13 is a wedge-shaped reflector with a through hole at the center, and a diameter of the through hole is appropriately set so that all the outgoing lasers can pass through. The reflector module 14 uses the wedge-shaped reflector.

In this example, the echo laser reflected by the reflector module 14 is parallel to the rotation shaft 3. When there are many transceiver modules provided opposite the reflecting surface of the rotation reflector 21, for example, when the rotation module is an eight-faced lens 21b in a shape of a truncated prism, in order that the outgoing laser arrives at the reflecting surface at an incident angle less than 90° relative to the rotation shaft, an upper end of the eight-faced lens 21b is larger than a lower end, a plurality of transceiver modules 10 are all arranged at an oblique lower part of the eight-faced lens 21b, and a circle of emission modules 11 and a circle of receiving modules 12 are spaced around the rotation shaft 3, and the receiving module 12 is arranged at an inner circle. Because a lower end of the eight-faced lens 21b is small, space available for accommodating the receiving modules 12 is also small, and a gap between the receiving modules 12 is small, which is inconvenient for a layout, assembling, and debugging of the receiving modules 12.

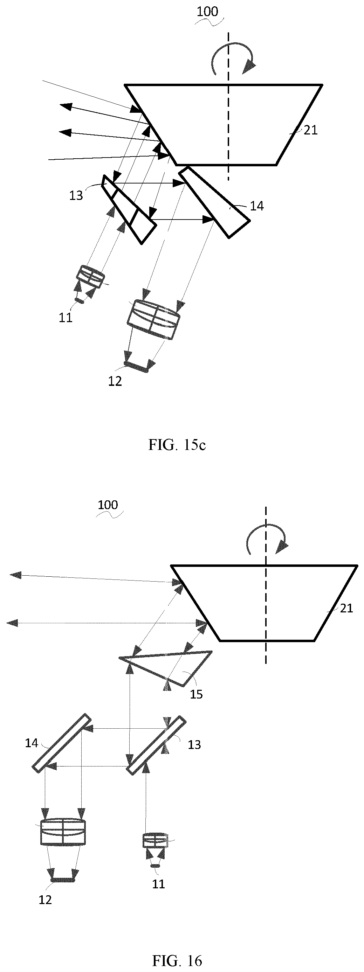

Therefore, in another example, as shown in FIG. 15c, an arrangement angle of the reflector module 14 is changed, so that the echo laser reflected by the reflector module 14 is emitted obliquely out, thereby increasing the space available for arranging the receiving module 12 and facilitate assembling and debugging of the receiving module 12.

As shown in FIG. 16, in another example, the LiDAR 100 further includes a deflection module 15, and the deflection module 15 is located on an optical path between the light-splitting module 13 and the rotation reflector 21. The deflection module 15 is configured to deflect the passing outgoing laser to the rotation reflector 21 by an angle, and is configured to deflect the passing echo laser to the light-splitting module 13 by an angle. The deflection module 15 is mainly configured to adjust an incident angle of the outgoing laser directed to the rotation reflector 21, so that the outgoing laser is directed to the rotation reflector 21 at a proper angle. With reference to an analysis of the incident angle of the outgoing laser on the rotation reflector 21, the outgoing laser is prevented from being blocked by an internal device, and a larger angle of view is implemented for the LiDAR 100. The angle and position of the transceiver module 10 do not need to be adjusted in order to adjust the incident angle of the outgoing laser, and only a proper deflection module needs to be selected, thereby reducing difficulty of system design and facilitating compact arrangement and volume reduction of the device. The deflection module 15 can be a wedge-shaped lens (to allow a beam to pass through).

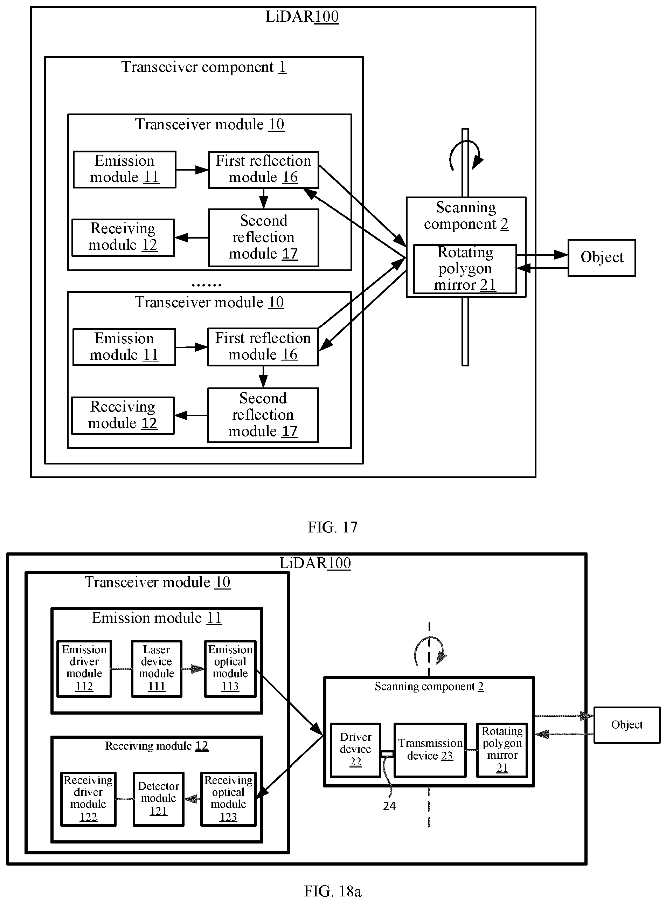

When the outgoing laser and the echo laser are off-axis, as shown in FIG. 17, in another example, the LiDAR 100 further includes a first reflection module 16 and a second reflection module 17. The first reflection module 16 is located on an optical path between the emission module 11 and the rotation reflector 21. The second reflection module 17 is located on an optical path between the first reflection module 16 and the receiving module 12. The first reflection module 16 is configured to reflect the outgoing laser and further direct the reflected outgoing laser toward the rotation reflector 21. The second reflection module 17 is configured to receive the echo laser reflected by the rotation reflector 21 and reflect the echo laser to the receiving module 12. Details are as follows.

As shown in FIG. 18a, the emission module 11 includes a laser device module 111, an emission driver module 112, and an emission optical module 113. The laser device module 111 is configured to emit an outgoing laser. The emission driver module 112 is connected to the laser device module 111 and is configured to drive and control the laser device module 111 to work. The emission optical module 113 is arranged on an optical path of the outgoing laser emitted by the laser device module 111, and is configured to collimate the outgoing laser. The emission optical module 113 may use a collimating element such as an optical fiber, a spherical lens group, a separate spherical lens group, or a cylindrical lens group.

The scanning component 2 further includes a driver device 22 and a transmission device 23. The driver device 22 is provided with an output shaft 24. The output shaft 24 is connected to the rotation reflector 21 through the transmission device 23. The output shaft 24 of the driver device 22 drives the rotation reflector 21 to rotate. The driver device 22 may be a motor, and the transmission device 23 may be a structure capable of implementing power drive, such as a drive chain, a drive gear, or a drive belt. Alternatively, an output end of the driver device 22 may directly drive the rotation reflector 21.

The receiving module 12 includes a detector module 121, a receiving driver module 122, and a receiving optical module 123. The receiving optical module 123 is arranged on an optical path of the echo laser reflected by the scanning module, and is configured to focus the echo laser. The detector module 121 is configured to receive the echo laser focused by the receiving optical module 123. The receiving driver module 122 is connected to the detector module 121, and is configured to drive and control the detector module 121 to work. The receiving optical module 123 can be a spherical lens, a spherical lens group, a cylindrical lens group, or the like.

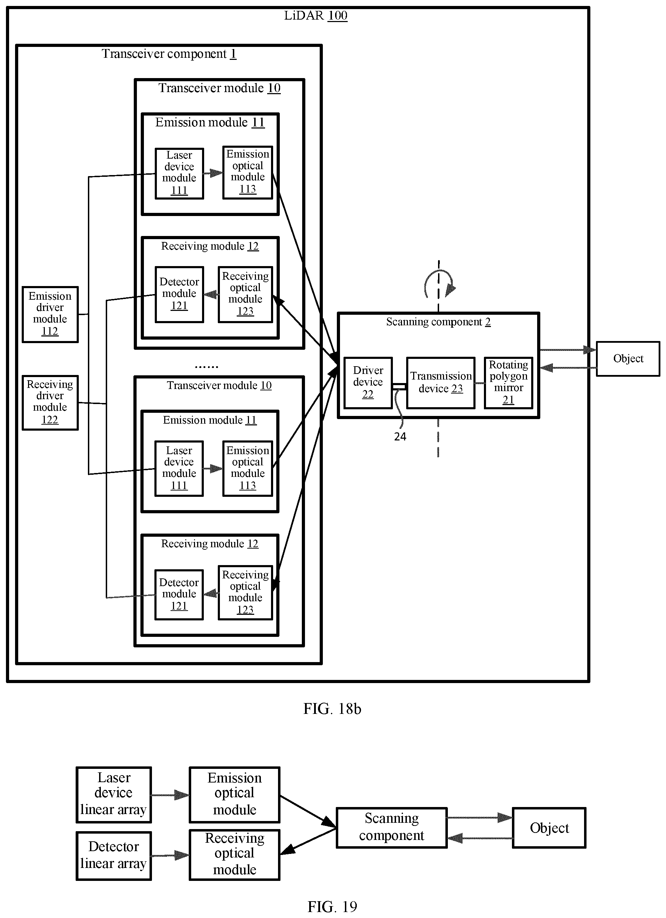

In the foregoing example shown in FIG. 18a, each emission module 11 is provided with an emission driver module 112, and each receiving module 12 is also provided with a receiving driver module 122. The emission driver module 112 is independently provided in each emission module 11 and the receiving driver module 122 is independently provided in each receiving module 12, thereby facilitating modular integration of each emission module 11 and receiving module 12. It is also possible that a common emission driver module 112 or receiving driver module 122 is arranged in the transceiver component 1, instead of separately arranging a driver module for each emission module 11 or receiving module 12, thereby simplifying the device and reducing complexity of the device. As shown in FIG. 18b, the transceiver component 1 further includes an emission driver module 112 and a receiving driver module 122. The emission driver module 112 is respectively connected to the laser device modules 111 in all the emission modules 11, and is configured to drive and control each laser device module 111 to work. The receiving driver module 122 is respectively connected to the detector modules 121 in all the receiving modules 12, and is configured to drive and control each detector module 121 to work. All the laser device modules 111 share one emission driver module 112, and all the detector modules 121 share one receiving driver module 122.

The laser device module 111 uses a laser device linear array, the detector module 121 uses a detector linear array, and the LiDAR 100 forms a vertical field of view covering a specific angle range to implement detection in the vertical direction.

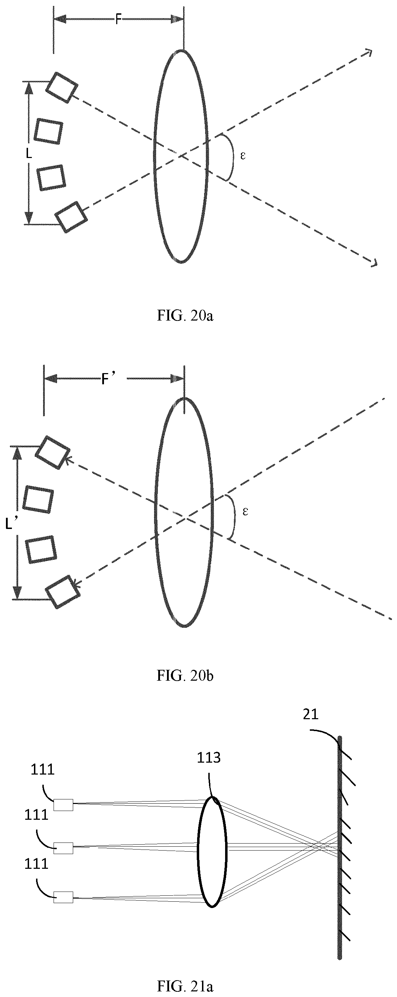

As shown in FIG. 19 and FIG. 20a, in some examples, a plurality of laser devices of the laser device linear array are arranged at a focal plane of the emission optical module 113, an optical axis of the laser device passes through the center of the emission optical module 113, and an outgoing laser passing through the emission optical module 113 covers the angle of view with a specific angle range.

If an extremely small gap is provided between laser devices in the laser device linear array, when the outgoing laser passes through the emission optical module 113 and then is emitted, it can be considered that an angle of the outgoing laser changes continuously in the vertical field of view, and the laser device linear array is located at the focal plane of the emission optical module. If the gap between laser devices in the laser device linear array is not small enough, that is, when the gap between laser devices in the laser device linear array is relatively large, the laser device linear array may not be located at the focal plane of the emission optical module 113, so that each beam of outgoing lasers passes through the emission optical module at a specific divergence angle. The divergence angle covers the gap between the outgoing lasers that is caused by the gap between the laser devices, thereby avoiding a discontinuous angle change of the outgoing laser within the vertical field of view.

As shown in FIG. 21a, the emission optical module 113 may be a telecentric lens, and the telecentric lens is configured to respectively collimate each beam of outgoing lasers emitted by the laser device module 111, and deflect the outgoing lasers toward a central optical axis of the telecentric lens. Because of consistent arrangement of multiple laser devices in the laser device linear array, directions of the multiple outgoing lasers are the same. If the lasers are only collimated before being emitted, the lasers can only cover a small angle range in the vertical direction, which cannot satisfy a detection need. The telecentric lens is used to deflect multiple parallel outgoing lasers toward a central optical axis, so that the outgoing lasers can cover a specific angle range in the vertical direction when being emitted, that is, have a larger vertical field of view.

As shown in FIG. 19 and FIG. 20b, in some examples, multiple detectors of the detector linear array are arranged at a focal plane of the receiving optical module 123, an optical axis of the detector passes through the center of the receiving optical module 123, and the echo laser passing through the receiving optical module 123 is received by the multiple detectors.

In some examples, the multiple detectors of the detector linear array can also be arranged on a plane on which a focal point of the receiving optical module 123 is located, or near the plane on which the focal point is located. Because an incident direction of the echo laser is different from an optical axis of the detector, the echo laser cannot enter the detector vertically, which reduces efficiency of receiving the echo laser by the detector. However, provided that the echo laser received by the detector linear array can satisfy the detection need, the foregoing arrangement is also acceptable.

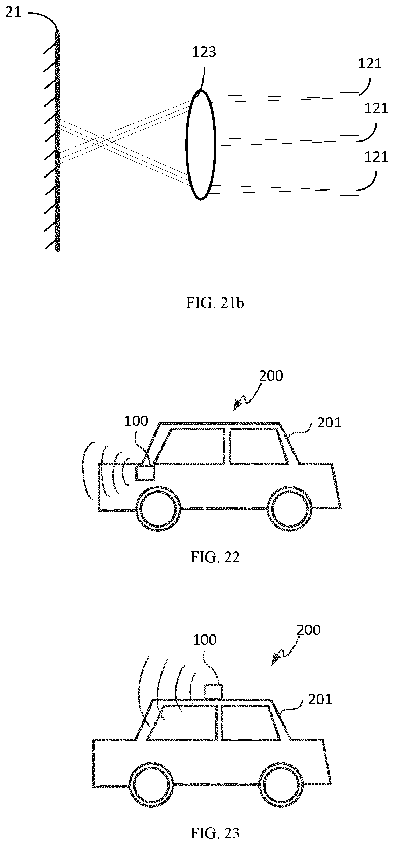

The receiving optical module 123 may be an ordinary focusing lens, so that the received echo laser is focused and then directed toward the receiving module 12. The receiving optical module 123 may alternatively be disposed as a telecentric lens, and the telecentric lens serves as the receiving optical module 123 and is configured to focus the echo laser, so that each beam of echo laser enters the detector linear array (as shown in FIG. 21b) perpendicularly, thereby improving the receiving efficiency of the detector linear array and effectively improving a detection effect of the LiDAR 100.

The receiving angle of view of the receiving optical module 133 needs to be the same as the emission angle of view of the emission optical module 113. It is generally considered that there is the following relationship:

$$\frac{L}{2F} = \tan\left(\frac{\varepsilon}{2}\right)$$

$$\frac{L'}{2F'} = \tan\left(\frac{\varepsilon}{2}\right)$$

L is a distance between laser devices at upper and lower ends of the laser device linear array, and is related to the number and gap of the laser devices. F is a focal length of the emission optical module. L' is a distance between the detectors at the upper and lower ends of the detector linear array, and is related to the number and gap of detectors. F' is a focal length of the receiving optical module. ε is the receiving angle of view of the receiving optical module and the emission angle of view of the emission optical module. The laser device linear array may use a light-emitting device that can form an array, such as a laser diode (LD) array, a vertical cavity surface emitting laser (VCSEL) array, and an optical fiber array. The detector linear array may use a receiving device that can form an array, such as an Avalanche Photo Diode (APD) array, a Silicon Photomultiplier (SiPM), an APD array, a Multi-Pixel Photon Counter (MPPC) array, a Photomultiplier Tube (PMT) array, or a Single-Photon Avalanche Diode (SPAD) array.

In some examples, the laser device linear array is arranged sparsely at both ends and densely in the middle, and the detector linear array is arranged sparsely at both ends and densely in the middle, so that sparse-dense-sparse scanning of the vertical field of view can be implemented. Resolution of the middle region is larger than that of the two end regions, thereby meeting a detection need of focusing on information of the middle region during the detection process.

The number of detectors included in the detector linear array does not need to be equal to the number of laser devices included in the laser device linear array, but the outgoing laser needs to satisfy that there is enough optical energy within the corresponding angle of view of each detector in the detector linear array to stimulate response of the detector. The number of detectors included in the detector linear array determines vertical resolution of the LiDAR 100. The number of detectors included in the detector linear array may be greater than or equal to the number of laser devices included in the laser device linear array. In an optional example, the laser device module 111 includes a laser devices arranged in the linear array, where j is an integer and $j \geq 1$. The detector module 31 includes $k \times j$ detectors arranged in the linear array, and each laser device corresponds to k detectors, where j is an integer and $j \geq 1$ and k is an integer and $k \geq 1$. That is, the number of laser devices is an integer multiple of the number of detectors. For example, one laser device corresponds to one detector, or one laser device corresponds to four detectors. In another optional example, the number of laser devices may not be an integer multiple of the number of detectors. For example, the laser device linear array includes four laser devices, and the detector linear array includes six detectors.

In addition, the LiDAR 100 may also comprise a control and signal processing module (not shown in the figure), such as a Field-Programmable Gate Array (FPGA). The FPGA is connected to the emission driver module 112 for emitting and controlling the emergent laser. The FPGA is also connected to a clock pin, a data pin, and a control pin of the receiving driver module 122 for receiving and controlling the echo laser.

Furthermore, based on a forgoing LiDAR, an example of the present invention proposes an automated driving apparatus 200, comprising the LiDAR 100 in the forgoing example. The automated driving apparatus 200 may be a car, an airplane, a boat, or other related apparatuses where the LiDAR is used for intelligent sensing and detection. The automated driving apparatus 200 comprises a driving apparatus body 201 and the LiDAR 100 in the forgoing example. The LiDAR 100 is mounted on the driving apparatus body 201.

As shown in FIG. 22, the automated driving apparatus 200 is an unmanned vehicle, and the LiDAR 100 is mounted on the side of the vehicle body. As shown in FIG. 23, the automated driving apparatus 200 is also an unmanned car, and the LiDAR 100 is mounted on the roof of a vehicle.

Finally, it should be noted that the foregoing examples are intended for describing instead of limiting the technical solutions of the present invention. Although the present invention is described in detail with reference to the foregoing examples, the person skilled in the art should understand that modifications may be made to the technical solutions described in the foregoing examples may be made to some or all technical features thereof, without departing from the scope of the technical solutions. All these modifications or replacements shall fall within the scope of the claims and specification of the present invention. Particularly, the technical features mentioned in all examples may be combined in any manner, provided that no structural conflict occurs. The present invention is not limited to the specific examples disclosed in this specification, but comprises all technical solutions that fall within the scope of the claims.

## Claims

**1.** A LiDAR, comprising:

a transceiver component and a scanning component,
wherein the transceiver component comprises n transceiver modules, wherein n is an integer greater than 1, and wherein each transceiver module comprises an emission module and a receiving module that are correspondingly arranged,

wherein the emission module is configured to emit outgoing laser light, and
wherein the receiving module is configured to receive echo laser light, wherein the echo laser light is laser light returning after the outgoing laser light is reflected by an object in an detection region;

wherein the scanning component comprises a rotation reflector configured to rotate around a rotation shaft,

wherein the rotation reflector comprises m reflecting surfaces, wherein m is an integer greater than 1 and less or equal to n, and wherein the n transceiver modules correspond to the m reflecting surfaces, and the reflecting surfaces are configured to reflect the outgoing laser light emitted by the emission module of each transceiver module and direct the reflected outgoing laser light toward the detection region, and are further configured to reflect the echo laser light and direct the reflected echo laser light toward the corresponding receiving module; and

wherein at least one of the n transceiver modules has detection performance different from that of another transceiver module, said detection performance comprising at least one of detection distance and detection resolution, and wherein a first one of the reflecting surfaces corresponds to a first plurality of the transceiver modules, and a second one of the reflecting surfaces corresponds to a second plurality of the transceiver modules, the number of the first plurality transceiver modules being different from the number of the second plurality transceiver modules.

**2.** The LiDAR according to claim 1, wherein:
a plurality of the n transceiver modules having different detection performance are adapted based on needs of the detection performance in different regions of an angle of view of the LiDAR.

**3.** The LiDAR according to claim 2, wherein the n transceiver modules comprise a first transceiver module and a second transceiver module, wherein:

the first transceiver module is aligned with a middle part in an entire angle of view and comprises at least one transceiver module,
the second transceiver module is aligned with left and right parts in the entire angle of view and comprises at least one transceiver module, and wherein the detection performance of the first transceiver module is better than the detection performance of the second transceiver module, whereby the first transceiver module has a detection distance greater than that of the second transceiver module and/or the first transceiver module has a detection resolution higher than that of the second transceiver module.

**4.** The LiDAR according to claim 1, wherein the reflecting surfaces corresponding to the n transceiver modules are arranged adjacently, and the adjacent reflecting surfaces form an angle K when arranged, where $0° \leq K \leq 180°$.

**5.** The LiDAR according to claim 1, wherein the reflecting surface is a plane or comprises several fold surfaces of reflecting regions that form different included angles with the rotation shaft.

**6.** The LiDAR according to claim 1, wherein a value of an included angle $\theta$ between the outgoing laser light directed toward the rotation reflector and the rotation shaft satisfies $0° \leq \theta \leq 90°$.

**7.** The LiDAR according to claim 1, wherein the outgoing laser light of the transceiver module and the echo laser light are coaxially arranged, and wherein the transceiver module further includes a light-splitting module configured to direct passing outgoing laser light to the rotation reflector, receive the echo laser light reflected by the rotation reflector, deflect the echo laser light, and further direct the reflected echo laser light to the corresponding receiving module.

**8.** The LiDAR according to claim 1, wherein:

the emission module includes a laser device module and an emission optical module, wherein:

the laser device module comprises a laser device linear array and is configured to emit the outgoing laser light, the laser device linear array including multiple laser devices arranged in the linear array, sparsely at two ends and densely in the middle, and

the emission optical module is arranged on an optical path of the outgoing laser light emitted by the laser device module, and is configured to collimate the outgoing laser light; and the receiving module comprises a detector module and a receiving optical module, wherein:

the receiving optical module is arranged on an optical path of the echo laser light reflected by the scanning component and is configured to focus the echo laser light,
the detector module comprises a detector linear array and is configured to receive the echo laser light focused by the receiving optical module, the detector linear array including multiple detectors arranged in the linear array, sparsely at two ends and densely in the middle.

**9.** The LiDAR according to claim 8, wherein:

the emission optical module comprises a telecentric lens configured to respectively collimate each beam of outgoing laser light emitted by the laser device module and to deflect the outgoing laser light toward a central optical axis of the telecentric lens; and/or
the receiving optical module comprises a telecentric lens configured to focus the echo laser light and cause each beam of echo laser light to be perpendicular to the detector linear array during incidence.

**10.** The LiDAR according to claim 8 or 9, wherein:

the emission module further includes an emission driver module connected to the laser device module and configured to drive and control the laser device module to work; or
the transceiver component further includes an emission driver module respectively connected to laser device modules in the n emission modules and configured to drive and control each laser device module to work.

**11.** The LiDAR according to claim 8 or 9, wherein:

the receiving module further includes a receiving driver module connected to the detector module and configured to drive and control the detector module to work; or
the transceiver component further includes a receiving driver module respectively connected to detector modules in the n receiving modules and configured to drive and control each detector module to work.

**12.** The LiDAR according to claim 8 or 9, wherein:

the laser device module comprises j laser devices arranged in the linear array, wherein j is an integer and $j \geq 1$;
the detector module comprises $k \times j$ detectors arranged in the linear array; and
each laser device corresponds to $k$ detectors, wherein $k$ is an integer and $k \geq 1$.

**13.** The LiDAR according to claim 1, wherein the scanning component further comprises a driver device and a transmission device, and wherein the driver device is provided with an output shaft connected to the rotation reflector through the transmission device and configured to drive the rotation reflector to rotate.

**14.** The LiDAR according to claim 4, wherein:

when K is 0°, the adjacent reflecting surfaces comprise front and back surfaces of the rotation reflector arranged in parallel, and the front and back surfaces of the rotation reflector are configured to implement scanning to form two angles of view; and
when K is 180°, the adjacent reflecting surfaces are arranged in parallel, the rotation reflector is formed by splicing two reflecting surfaces each having different reflectivity.

**15.** An automated driving apparatus, including a driving apparatus body and a LiDAR according to any one of claims 1 to 14, wherein the LiDAR is mounted on the driving apparatus body.

**Patentansprüche**

**1.** LiDAR, umfassend:

eine Sende-Empfangs-Komponente und eine Abtast-Komponente,
wobei die Sende-Empfangs-Komponente n Sende-Empfangs-Module umfasst, wobei n eine ganze Zahl größer als 1 ist, und wobei jedes Sende-Empfangs-Modul ein Sendemodul und ein Empfangsmodul umfasst, die einander entsprechend angeordnet sind,

wobei das Sendemodul konfiguriert ist, ausgehendes Laserlicht zu emittieren, und
wobei das Empfangsmodul konfiguriert ist, Echo-Laserlicht zu empfangen, wobei das Echo-Laserlicht Laserlicht ist, das zurückkehrt, nachdem das ausgehende Laserlicht von einem Objekt in einem Erfassungsbereich reflektiert wurde;

wobei die Abtast-Komponente einen Rotationsreflektor umfasst, der konfiguriert ist, sich um eine Rotationswelle zu drehen,

wobei der Rotationsreflektor m Reflektionsflächen umfasst, wobei m eine ganze Zahl größer als 1 und kleiner oder gleich n ist, und
wobei die n Sende-Empfangs-Module den m Reflektionsflächen entsprechen, und die Reflektionsflächen konfiguriert sind, das von dem Sendemodul jedes Sende-Empfangs-Moduls emittierte ausgehende Laserlicht zu reflektieren und das reflektierte ausgehende Laserlicht in Richtung des Erfassungsbereichs zu lenken, und ferner konfiguriert sind, das Echo-Laserlicht zu reflektieren und das reflektierte Echo-Laserlicht in Richtung des entsprechenden Empfangsmoduls zu lenken; und

wobei mindestens eines der n Sende-Empfangs-Module eine von einem anderen Sende-Empfangs-Modul verschiedene Erfassungsleistung aufweist, wobei die Erfassungsleistung mindestens eines von Erfassungsreichweite und Erfassungsauflösung umfasst, und
wobei eine erste der Reflektionsflächen einer ersten Vielzahl der Sende-Empfangs-Module entspricht und eine zweite der Reflektionsflächen einer zweiten Vielzahl der Sende-Empfangs-Module entspricht, wobei die Anzahl der ersten Vielzahl von Sende-Empfangs-Modulen sich von der Anzahl der zweiten Vielzahl von Sende-Empfangs-Modulen unterscheidet.

**2.** LiDAR nach Anspruch 1, wobei:
eine Vielzahl der n Sende-Empfangs-Module mit unterschiedlicher Erfassungsleistung basierend auf den Anforderungen der Erfassungsleistung in verschiedenen Bereichen eines Blickwinkels des LiDARs angepasst sind.

**3.** LiDAR nach Anspruch 2, wobei die n Sende-Empfangs-Module ein erstes Sende-Empfangs-Modul und ein zweites Sende-Empfangs-Modul umfassen, wobei:

das erste Sende-Empfangs-Modul auf einen mittleren Teil in einem gesamten Blickwinkel ausgerichtet ist und mindestens ein Sende-Empfangs-Modul umfasst,
das zweite Sende-Empfangs-Modul auf einen linken und einen rechten Teil in dem gesamten Blickwinkel ausgerichtet ist und mindestens ein Sende-Empfangs-Modul umfasst, und
wobei die Erfassungsleistung des ersten Sende-Empfangs-Moduls besser ist als die Erfassungsleistung des zweiten Sende-Empfangs-Moduls, wodurch das erste Sende-Empfangs-Modul eine größere Erfassungsreichweite als das zweite Sende-Empfangs-Modul aufweist und/oder das erste Sende-Empfangs-Modul eine höhere Erfassungsauflösung als das zweite Sende-Empfangs-Modul aufweist.

**4.** LiDAR nach Anspruch 1, wobei die den n Sende-Empfangs-Modulen entsprechenden Reflektionsflächen benachbart angeordnet sind und die benachbarten Reflektionsflächen bei ihrer Anordnung einen Winkel K bilden, wobei $0° \leq K \leq 180°$ gilt.

**5.** LiDAR nach Anspruch 1, wobei die Reflektionsfläche eine Ebene ist oder mehrere Faltenflächen von Reflektionsbereichen umfasst, die unterschiedliche Eckenwinkel mit der Rotationswelle bilden.

**6.** LiDAR nach Anspruch 1, wobei ein Wert eines Eckenwinkels $\theta$ zwischen dem zu dem Rotationsreflektor gelenkten ausgehenden Laserlicht und der Rotationswelle $0° \leq \theta \leq 90°$ erfüllt.

**7.** LiDAR nach Anspruch 1, wobei das ausgehende Laserlicht des Sende-Empfangs-Moduls und das Echo-Laserlicht koaxial angeordnet sind, und
wobei das Sende-Empfangs-Modul ferner ein Strahlteilermodul umfasst, das konfiguriert ist, durchtretendes ausgehendes Laserlicht zu dem Rotationsreflektor zu lenken, das von dem Rotationsreflektor reflektierte Echo-Laserlicht zu empfangen, das Echo-Laserlicht abzulenken und ferner das reflektierte Echo-Laserlicht zu dem entsprechenden Empfangsmodul zu lenken.

**8.** LiDAR nach Anspruch 1, wobei:

das Sendemodul ein Laservorrichtungsmodul und ein optisches Sendemodul umfasst, wobei: das Laservorrichtungsmodul eine Laservorrichtungs-Linearanordnung umfasst und konfiguriert ist, das ausgehende Laserlicht zu emittieren, wobei die Laservorrichtungs-Linearanordnung mehrere Laservorrichtungen umfasst, die in der Linearanordnung angeordnet sind, wobei die Anordnung an zwei Enden geringer und in der Mitte dichter ist, und
das optische Sendemodul auf einem Strahlengang des von dem Laservorrichtungsmodul emittierten ausgehenden Laserlichts angeordnet ist und konfiguriert ist, das ausgehende Laserlicht zu kollimieren; und

das Empfangsmodul ein Detektormodul und ein optisches Empfangsmodul umfasst, wobei: das optische Empfangsmodul auf einem Strahlengang des von der Abtast-Komponente reflektierten Echo-Laserlichts angeordnet ist und konfiguriert ist, das Echo-Laserlicht zu fokussieren,
das Detektormodul eine Detektor-Linearanordnung umfasst und konfiguriert ist, das von dem optischen Empfangsmodul fokussierte Echo-Laserlicht zu empfangen, wobei die Detektor-Linearanordnung mehrere Detektoren umfasst, die in der Linearanordnung angeordnet sind, wobei die Anordnung an zwei Enden geringer und in der Mitte dichter ist.

**9.** LiDAR nach Anspruch 8, wobei:

das optische Sendemodul eine telezentrische Linse umfasst, die konfiguriert ist, jeweils jeden Strahl des von dem Laservorrichtungsmodul emittierten ausgehenden Laserlichts zu kollimieren und das ausgehende Laserlicht in Richtung einer zentralen optischen Achse der telezentrischen Linse abzulenken; und/oder

das optische Empfangsmodul eine telezentrische Linse umfasst, die konfiguriert ist, das Echo-Laserlicht zu fokussieren und zu bewirken, dass jeder Strahl von Echo-Laserlicht während des Einfalls senkrecht auf die Detektor-Lineraranordnung trifft.

**10.** LiDAR nach Anspruch 8 oder 9, wobei:

das Sendemodul ferner ein Sendetreibermodul umfasst, das mit dem Laservorrichtungsmodul verbunden ist und konfiguriert ist, das Laservorrichtungsmodul anzutreiben und zu steuern, um zu arbeiten; oder
die Sende-Empfangs-Komponente ferner ein Sendetreibermodul umfasst, das jeweils mit Laservorrichtungsmodulen in den n Sendemodulen verbunden ist und konfiguriert ist, jedes Laservorrichtungsmodul anzutreiben und zu steuern, um zu arbeiten.

**11.** LiDAR nach Anspruch 8 oder 9, wobei:

das Empfangsmodul ferner ein Empfangstreibermodul umfasst, das mit dem Detektormodul verbunden ist und konfiguriert ist, das Detektormodul anzutreiben und zu steuern, um zu arbeiten; oder
die Sende-Empfangs-Komponente ferner ein Empfangstreibermodul umfasst, das jeweils mit Detektormodulen in den n Empfangsmodulen verbunden ist und konfiguriert ist, jedes Detektormodul anzutreiben und zu steuern, um zu arbeiten.

**12.** LiDAR nach Anspruch 8 oder 9, wobei:

das Laservorrichtungsmodul j Laservorrichtungen umfasst, die in der Linearanordnung angeordnet sind, wobei j eine ganze Zahl ist und $j \geq 1$ gilt;
das Detektormodul $k \times j$ Detektoren umfasst, die in der Linearanordnung angeordnet sind; und
jede Laservorrichtung $k$ Detektoren entspricht, wobei $k$ eine ganze Zahl ist und $k \geq 1$ gilt.

**13.** LiDAR nach Anspruch 1, wobei die Abtast-Komponente ferner eine Antriebsvorrichtung und ein Getriebe umfasst, und
wobei die Antriebsvorrichtung mit einer Abtriebswelle bereitgestellt ist, die über das Getriebe mit dem Rotationsreflektor verbunden und konfiguriert ist, den Rotationsreflektor zur Drehung anzutreiben.

**14.** LiDAR nach Anspruch 4, wobei:

wenn K 0° beträgt, die benachbarten Reflektionsflächen vordere und hintere Flächen des Rotationsreflektors umfassen, die parallel angeordnet sind, und die vordere und hintere Fläche des Rotationsreflektors konfiguriert sind, um eine Abtastung zur Bildung von zwei Blickwinkeln zu implementieren; und
wenn K 180° beträgt, die benachbarten Reflektionsflächen parallel angeordnet sind, der Rotationsreflektor durch Zusammenfügen zweier Reflektionsflächen gebildet wird, die jeweils unterschiedliche Reflexionsvermögen aufweisen.

**15.** Automatische Fahreinrichtung, umfassend

einen Fahreinrichtungs-Körper und einen LiDAR nach einem der Ansprüche 1 bis 14,
wobei der LiDAR auf dem Fahreinrichtungs-Körper angebracht ist.

**Revendications**

**1.** LiDAR, comprenant :

un composant émetteur-récepteur et un composant de balayage,
dans lequel le composant émetteur-récepteur comprend n modules émetteurs-récepteurs, n étant un entier supérieur à 1, et chaque module émetteur-récepteur comprenant un module d'émission et
un module de réception agencés de manière correspondante,

dans lequel le module d'émission est configuré pour émettre une lumière laser sortante, et
dans lequel le module de réception est configuré pour recevoir une lumière laser d'écho, la lumière laser d'écho étant la lumière laser renvoyée après que la lumière laser sortante a été réfléchie par un objet dans une région de détection ;

dans lequel le composant de balayage comprend un réflecteur rotatif configuré pour tourner autour d'un arbre de rotation,

dans lequel le réflecteur rotatif comprend m surfaces réfléchissantes, m étant un entier supérieur à 1 et inférieur ou égal à n, et
dans lequel les n modules émetteurs-récepteurs correspondent aux m surfaces réfléchissantes, et les surfaces réfléchissantes sont configurées pour réfléchir la lumière laser sortante émise par le module d'émission de chaque module émetteur-récepteur et diriger la lumière laser sortante réfléchie vers la région de détection, et sont en outre configurées pour réfléchir la lumière laser d'écho et diriger la lumière laser d'écho réfléchie vers le module de réception correspondant ; et dans lequel au moins l'un des n modules émetteurs-récepteurs présente des performances de détection différentes de celles d'un autre module émetteur-récepteur, lesdites performances de détection comprenant au moins l'une entre une distance de détection et une résolution de détection, et

dans lequel une première des surfaces réfléchissantes correspond à une première pluralité des modules émetteurs-récepteurs, et une seconde des surfaces réfléchissantes correspond à une seconde pluralité des modules émetteurs-récepteurs, le nombre de la première pluralité de modules émetteurs-récepteurs étant différent du nombre de la seconde pluralité de modules émetteurs-récepteurs.

**2.** LiDAR selon la revendication 1, dans lequel : une pluralité des n modules émetteurs-récepteurs présentant des performances de détection différentes sont adaptés en fonction des besoins des performances de détection dans différentes régions d'un angle de vue du LiDAR.

**3.** LiDAR selon la revendication 2, dans lequel les n modules émetteurs-récepteurs comprennent un premier module émetteur-récepteur et un deuxième module émetteur-récepteur, dans lequel :

le premier module émetteur-récepteur est aligné avec une partie centrale dans un angle de vue entier et comprend au moins un module émetteur-récepteur,
le deuxième module émetteur-récepteur est aligné avec des parties gauche et droite dans l'angle de vue entier et comprend au moins un module émetteur-récepteur, et
dans lequel les performances de détection du premier module émetteur-récepteur sont meilleures que les performances de détection du deuxième module émetteur-récepteur, ce par quoi le premier module émetteur-récepteur a une distance de détection supérieure à celle du deuxième module émetteur-récepteur et/ou le premier module émetteur-récepteur a une résolution de détection plus élevée que celle du deuxième module émetteur-récepteur.

**4.** LiDAR selon la revendication 1, dans lequel les surfaces réfléchissantes correspondant aux n modules émetteurs-récepteurs sont agencées de manière adjacente, et les surfaces réfléchissantes adjacentes forment un angle K lors de leur agencement, où $0° \leq K \leq 180°$.

**5.** LiDAR selon la revendication 1, dans lequel la surface réfléchissante est un plan ou comprend plusieurs surfaces pliées de régions réfléchissantes qui forment différents angles inclus avec l'arbre de rotation.

**6.** LiDAR selon la revendication 1, dans lequel une valeur d'un angle inclus $\theta$ entre la lumière laser sortante dirigée vers le réflecteur rotatif et l'arbre de rotation satisfait $0° \leq \theta \leq 90°$.

**7.** LiDAR selon la revendication 1, dans lequel la lumière laser sortante du module émetteur-récepteur et la lumière laser d'écho sont agencées de manière coaxiale, et dans lequel le module émetteur-récepteur comprend en outre un module de séparation de lumière configuré pour diriger la lumière laser sortante passante vers le réflecteur rotatif, recevoir la lumière laser d'écho réfléchie par le réflecteur rotatif, dévier la lumière laser d'écho, et en outre diriger la lumière laser d'écho réfléchie vers le module de réception correspondant.

**8.** LiDAR selon la revendication 1, dans lequel :

le module d'émission comprend un module de dispositif laser et un module optique d'émission, dans lequel :
le module de dispositif laser comprend un réseau linéaire de dispositifs laser et est configuré pour émettre la lumière laser sortante, le réseau linéaire de dispositifs laser incluant de multiples dispositifs laser agencés dans le réseau linéaire, de manière éparse aux deux extrémités et dense au milieu, et
le module optique d'émission est agencé sur un chemin optique de la lumière laser sortante émise par le module de dispositif laser, et est configuré pour collimater la lumière laser sortante ; et
le module de réception comprend un module de détecteur et un module optique de réception, dans lequel :
le module optique de réception est agencé sur un chemin optique de la lumière laser d'écho réfléchie par le composant de balayage et est configuré pour focaliser la lumière laser d'écho, le module de détecteur comprend un réseau linéaire de détecteurs et est configuré pour recevoir la lumière laser d'écho focalisée par le module optique de réception, le réseau linéaire de détecteurs incluant de multiples détecteurs agencés dans le réseau linéaire, de manière éparse aux deux extrémités et dense au milieu.

**9.** LiDAR selon la revendication 8, dans lequel : le module optique d'émission comprend une lentille télécentrique configurée pour collimater respectivement chaque faisceau de lumière laser sortante émis par le module de dispositif laser et pour dévier la lumière laser sortante vers un axe optique central de la lentille télécentrique ; et/ou le module optique de réception comprend une lentille télécentrique configurée pour focaliser la lumière laser d'écho et amener chaque faisceau de lumière laser d'écho à être perpendiculaire au réseau linéaire de détecteurs lors de l'incidence.

**10.** LiDAR selon la revendication 8 ou 9, dans lequel :

le module d'émission comprend en outre un module pilote d'émission connecté au module de dispositif laser et configuré pour commander et contrôler le module de dispositif laser afin qu'il fonctionne ; ou
le composant émetteur-récepteur comprend en outre un module pilote d'émission respectivement connecté à des modules de dispositif laser dans les n modules d'émission et configuré pour commander et contrôler chaque module de dispositif laser afin qu'il fonctionne.

**11.** LiDAR selon la revendication 8 ou 9, dans lequel :

le module de réception comprend en outre un module pilote de réception connecté au module de détecteur et configuré pour commander et contrôler le module de détecteur afin qu'il fonctionne ; ou
le composant émetteur-récepteur comprend en outre un module pilote de réception respectivement connecté à des modules de détecteur dans les n modules de réception et configuré pour commander et contrôler chaque module de détecteur afin qu'il fonctionne.

**12.** LiDAR selon la revendication 8 ou 9, dans lequel :

le module de dispositif laser comprend j dispositifs laser agencés dans le réseau linéaire, où $j$ est un entier et $j \geq 1$ ;
le module de détecteur comprend $k \times j$ détecteurs agencés dans le réseau linéaire ; et
chaque dispositif laser correspond à $k$ détecteurs, où $k$ est un entier et $k \geq 1$.

**13.** LiDAR selon la revendication 1, dans lequel le composant de balayage comprend en outre un dispositif d'entraînement et un dispositif d'émission, et dans lequel le dispositif d'entraînement est pourvu d'un arbre de sortie connecté au réflecteur rotatif par l'intermédiaire du dispositif d'émission et configuré pour entraîner la rotation du réflecteur rotatif.

**14.** LiDAR selon la revendication 4, dans lequel :

lorsque K est de 0°, les surfaces réfléchissantes adjacentes comprennent des surfaces avant et arrière du réflecteur rotatif agencées en parallèle, et les surfaces avant et arrière du réflecteur rotatif sont configurées pour mettre en œuvre un balayage afin de former deux angles de vue ; et lorsque K est de 180°, les surfaces réfléchissantes adjacentes sont agencées en parallèle, le réflecteur rotatif est formé par l'épissure de deux surfaces réfléchissantes ayant chacune une réflectivité différente.

**15.** Appareil de conduite automatisée, comprenant un corps d'appareil de conduite et un LiDAR selon l'une quelconque des revendications 1 à 14, dans lequel le LiDAR est monté sur le corps d'appareil de conduite.

LiDAR
100
Transceiver component
1
Transceiver
module 10
Emission
module 11
Receiving
module 12
......
Transceiver
module 10
Emission
module 11
Receiving
module 12
Scanning
component 2
Object

FIG. 1

21a

FIG. 2a

21b

FIG. 2b

21
d
c
a
b
X1
X2
First transceiver module 101
Second transceiver module 102

FIG. 3a

21
a
d
b
c
X1
X2
First transceiver module 101
Second transceiver module 102

FIG. 3b

21
b
a
c
d
X1
X2
First transceiver module 101
Second transceiver module 102

FIG. 3c

21
c
b
d
a
X1
X2
First transceiver module 101
Second transceiver module 102

FIG. 3d

X2
X1

FIG. 4

Sixth transceiver module 106
Fifth transceiver module 105
Seventh transceiver module 107
Eighth transceiver module 108
Fourth transceiver module 104
Third transceiver module 103
First transceiver module 101
Second transceiver module 102
X1
X2
X3
X4
X5
X6
X7
X8
a
b
c
d
e
f
g
h
21b

FIG. 5

3
21

FIG. 6

a
la
b
2 α
la
lb
α
a
2 α
la
α
b
2 β
lb
β

FIG. 7a

FIG. 7b

FIG. 8a

FIG. 8b

c
2 γ
lc
γ
d
2 δ
ld
δ
a
25°
25°
A
la
b
25°
A
25°
25°
B
lb
12.5°

FIG. 8c

FIG. 8d

FIG. 9a

FIG. 9b

c
25°
A
50°
25°
B
25°
C
25°
lc
25°

FIG. 9c

d
25°
A
50°
25°
B
75°
25°
C
25°
D
25°
ld
37.5°

FIG. 9d

25°
d
D
ld
25°
A
25°
25°
B
50°
75°
25°
C
25°

FIG. 10

c
25°
A
25°
25°
B(C)
lc
12.5°

FIG. 11a

d
25°
A
50°
25°
B(C)
25°
ld
25°
D
25°

FIG. 11b

Y1
Y2 (Y3)
Y4

FIG. 12a

Z11
Z22
Z12
Z13
Z21
Z23
Z31
Z33
Z32

FIG. 12b

21
100

FIG. 13

21
100

FIG. 14

LiDAR
100
Transceiver component 1
Transceiver module 10
Emission module 11
Light-splitting module 13
Receiving module 12
......
Transceiver module 10
Emission module 11
Light-splitting module 13
Receiving module 12
Scanning component 2
Rotating polygon mirror 21
Object

FIG. 15a

100
21
13
14
11
12

FIG. 15b

100
21
13
14
11
12

FIG. 15c

100
21
15
14
13
12
11

FIG. 16

LiDAR100
Transceiver component 1
Transceiver module 10
Emission module 11
First reflection module 16
Receiving module 12
Second reflection module 17
......
Transceiver module 10
Emission module 11
First reflection module 16
Receiving module 12
Second reflection module 17
Scanning component 2
Rotating polygon mirror 21
Object

FIG. 17

LiDAR100
Transceiver module 10
Emission module 11
Emission driver module 112
Laser device module 111
Emission optical module 113
Receiving module 12
Receiving driver module 122
Detector module 121
Receiving optical module 123
Scanning component 2
Driver device 22
Transmission device 23
Rotating polygon mirror 21
24
Object

FIG. 18a

LiDAR 100

Transceiver component 1

Transceiver module 10

Emission module 11

Laser device module 111

Emission optical module 113

Receiving module 12

Detector module 121

Receiving optical module 123

Emission driver module 112

Receiving driver module 122

......

Transceiver module 10

Emission module 11

Laser device module 111

Emission optical module 113

Receiving module 12

Detector module 121

Receiving optical module 123

Scanning component 2

Driver device 22

Transmission device 23

Rotating polygon mirror 21

24

Object

FIG. 18b

Laser device linear array
Emission optical module
Detector linear array
Receiving optical module
Scanning component
Object

FIG. 19

F
L
ε

FIG. 20a

F'
L'
ε

FIG. 20b

21
113
111
111
111

FIG. 21a

21
123
121
121
121

FIG. 21b

200
100
201

FIG. 22

100
200
201

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2019102326 W
- CN 109254286 A